# EUROPÄISCHE PATENTSCHRIFT

(11) **EP 4 128 695 B1**
(45) Veröffentlichungstag und Bekanntmachung des Hinweises auf die Patenterteilung: **01.05.2024**
(21) Anmeldenummer: 21715854.2
(22) Anmeldetag: 25.03.2021
(51) Int. Cl.: H04L 9/40

(54) **PERSONALISIERTER, SERVERINDIVIDUELLER AUTHENTIFIZIERUNGSMECHANISMUS**
PERSONALIZED AND SERVER-SPECIFIC AUTHENTICATION MECHANISM
MÉCANISME D'AUTHENTIFICATION PERSONNALISÉ ET POUR UN SERVEUR SPÉCIFIQUE

(30) Priorität: 31.03.2020 DE 102020108828
(43) Veröffentlichungstag der Anmeldung: 08.02.2023
(73) Patentinhaber: Bundesdruckerei GmbH, 10969 Berlin (DE)
(72) Erfinder: DIETRICH, Frank, 12437 Berlin (DE)
(74) Vertreter: Richardt Patentanwälte PartG mbB
(86) Internationale Anmeldenummer: PCT/EP2021/057752
(87) Internationale Veröffentlichungsnummer: WO 2021/198017

(56) Entgegenhaltungen:
- WO-A2-2009/001197
- US-A1- 2007 118 891
- US-B1- 9 323 909

## Beschreibung

Die Erfindung betrifft ein Verfahren zum Implementieren eines Authentifizierungsmechanismus sowie ein Nutzer-Computersystem und ein System zum Ausführen des Verfahrens.

Im Zuge der zunehmenden Digitalisierung und Vernetzung nehmen über Netzwerke, wie das Internet, bereitgestellte Dienste eine immer wichtigere Stellung sowohl im alltäglichen Leben, als auch im Berufsleben ein. Um beispielsweise nutzerspezifische oder zugangsbeschränkte Dienste in Anspruch nehmen zu können, muss sich der Nutzer über das Netzwerk gegenüber einem Dienst-Server authentisieren. Beispielsweise verwendet der Nutzer einen Benutzernahmen und ein Passwort zum Anmelden bei dem Dienst-Server. Der Nutzer gibt den Benutzernamen an und authentisiert sich mit seinem Passwort.

Der Dienst-Server authentifiziert den Nutzer dann, in dem er verifiziert, ob das angegebene Passwort für den verwendeten Benutzername korrekt ist. Erst wenn diese Verifizierung erfolgreich ist und der Nutzer damit durch den Dienst-Server authentifiziert ist, werden dem Nutzer ihm zugeordnete Zugangsberechtigungen im Rahmen einer Autorisierung durch den Dienst-Server, beispielsweise für die Dauer einer Sitzung, zugewiesen.

Eine Eingabe von Benutzernamen und Passwort ist für den Nutzer jedoch beispielsweise aufgrund der Eingabe umständlich und es kann leicht zu Eingabefehlern kommen. Der Nutzer muss sich die entsprechenden Angaben merken und es bestehen Sicherheitsrisiken, wenn sich der Nutzer die entsprechenden Angaben irgendwo, beispielsweise schriftlich, hinterlegt. Ferner bestehen Sicherheitsrisiken bei der Eingabe der entsprechenden Angaben, etwa durch "Shoulder Surfing", wobei ein unberechtigter Dritter beispielsweise die Eingabefolge des Nutzers auf einer Tastatur beobachtet, um sie später für den unerlaubten Zugriff auf den Dienst-Server zu nutzen.

Es gibt verschiedene Ansätze zum Lösen der vorgenannten Probleme. Jedoch ist ein grundlegendes Problem beim Implementieren von Authentifizierungsmechanismen, dass sich der Nutzer zum Nutzen eines von einem Dienst-Server bereitgestellten personalisierten Dienstes zunächst einmal bei dem Dienst-Server registrieren muss. Hierzu gibt der Nutzer im Zuge eines Registrierungsvorgangs seine Personalisierungsdaten, beispielsweise über ein Web-Formular, ein. Dabei stellen sich wieder ähnliche Probleme, wie die zuvor genannten: Die Eingabe ist umständlich, es kann leicht zu Eingabefehlern kommen und es bestehen Sicherheitsrisiken bei der Eingabe durch den Nutzer.

Die WO 2009/001197 A2 beschreibt einen tragbaren Authentifizierungstoken, welches Verbindungsmittel zum Verbinden mit einem Computer, Browser-Kommunikationsmittel zum Kommunizieren mit einem auf dem Computer laufenden Browser und Nutzerauthentifizierungsmittel zum Authentifizieren eines Nutzers des Tokens gegenüber einem Server umfasst. Die Nutzerauthentifizierungsmittel werden über die Browserkommunikationsmittel ausgelöst, wenn sich der Nutzer vom Browser des Computers mit dem Server verbindet. Die Nutzerauthentifizierungsmittel sind so eingestellt, dass sie den Nutzer durch eine Kommunikation mit dem Server über den Browser authentifizieren. Der Token umfasst Au-βerband-Token-Kommunikationsmittel, die so eingestellt sind, dass sie die Nutzerauthentifizierung validieren, indem sie einen Kommunikationskanal zwischen dem Token und dem Server aufbauen, wobei der Kommunikationskanal den Browser umgeht.

Die US 2007/118891 A1 beschreibt einen Authentifizierungstoken, welcher so konfiguriert ist, dass er Sicherheitsnachweise sicher von anderen Authentifizierungstoken und/oder Geräten bezieht. Auf diese Weise kann ein einziger Authentifizierungstoken die Authentifizierungsnachweise speichern, die für den Zugriff auf eine Vielzahl von Ressourcen, Diensten und Anwendungen für einen Nutzer erforderlich sind. Der universelle Authentifizierungstoken umfasst eine Nutzerschnittstelle, einen Speicher zum Speichern einer Vielzahl von Authentifizierungsaufzeichnungen für einen Nutzer und einen sicheren Prozessor. Der sichere Prozessor stellt die erforderlichen kryptografischen Operationen bereit, um Daten zu verschlüsseln, zu entschlüsseln und/oder zu authentisieren, die von dem Token gesendet oder empfangen werden.

Die US 9 323 909 B1 beschreibt ein Verfahren, welches ein Bereitstellen eines ersten Teilsatzes von Authentifizierungsinformationen aus einem Satz von Authentifizierungsinformationen, die einem ersten an einen Nutzer ausgegebenen kryptografischen Gerät zugeordnet sind, umfasst an ein zweites kryptografisches Gerät in Verbindung mit einer ersten Nutzerauthentifizierungsanfrage als Antwort auf eine Zugriffsanfrage des Nutzers auf eine erste geschützte Ressource, wobei der erste Teilsatz einen ersten Satz von N vorberechneten Passwörtern und entsprechenden Herausforderungen umfasst, und ein Bereitstellen eines zweiten Teilsatzes von Authentifizierungsinformationen aus dem Satz von Authentifizierungsinformationen, die dem ersten kryptografischen Gerät zugeordnet sind, an ein drittes kryptografisches Gerät in Verbindung mit einer zweiten Nutzerauthentifizierungsanfrage als Antwort auf eine Zugriffsanfrage des Nutzers auf eine zweite geschützte Ressource, wobei der zweite Teilsatz einen zweiten Satz von N vorberechneten Passwörtern und entsprechenden Herausforderungen umfasst.

Der Erfindung liegt demgegenüber die Aufgabe zugrunde, ein verbessertes Verfahren zum Implementieren eines Authentifizierungsmechanismus zu schaffen.

Die der Erfindung zugrundeliegende Aufgabe wird jeweils mit den Merkmalen der unabhängigen Patentansprüche gelöst. Ausführungsformen der Erfindung sind in den abhängigen Patentansprüchen angegeben.

Ausführungsformen umfassen ein Verfahren zum Implementieren eines Authentifizierungsmechanismus unter Verwendung eines Nutzer-Computersystems. Der Authentifizierungsmechanismus stellt eine personalisierte, serverindividuelle Authentisierung eines Nutzers gegenüber einem Dienst-Server unter Verwendung eines Authentisierungstokens bereit.

Das Verfahren umfasst:
- Aufrufen einer von dem Dienst-Server bereitgestellten Registrierungswebseite zum Registrieren des Nutzers bei dem Dienst-Server durch das Nutzer-Computersystem über ein Netzwerk unter Verwendung einer Browseranwendung, wobei im Zuge des Aufrufens der Registrierungswebseite ein erster verschlüsselter Kommunikationskanal zwischen dem Nutzer-Computersystem und dem Dienst-Server aufgebaut wird, wobei das Nutzer-Computersystem den Dienst-Server im Zuge des Aufbaus des ersten verschlüsselten Kommunikationskanals unter Verwendung eines Dienst-Server-Zertifikats authentifiziert, wobei das Registrieren des Nutzers ein Erstellen eines personalisierten Nutzerkontos für den Nutzer durch den Dienst-Server umfasst,
- Aufbau eines parallelen zweiten verschlüsselten Kommunikationskanal zwischen dem Nutzer-Computersystem und dem Dienst-Server, wobei im Zuge des Aufbaus des zweiten verschlüsselten Kommunikationskanals eine gegenseitige Authentifizierung von Nutzer und Dienst-Server unter Verwendung eines Nutzer-Zertifikats und des Dienst-Server-Zertifikats erfolgt,
- Empfangen einer ersten Aufforderung von dem Dienst-Server durch das Nutzer-Computersystem zum Bereitstellen von Personalisierungsdaten des Nutzers zur Personalisierung des Nutzerkontos,
- Initiieren eines Auslesens der bereitzustellenden Personalisierungsdaten durch das Nutzer-Computersystem aus einer elektronischen Personalisierungsdatenquelle, wobei ein Auslesen der bereitzustellenden Personalisierungsdaten ein erfolgreiches Authentisieren des Nutzers gegenüber der Personalisierungsdatenquelle voraussetzt,
- Weiterleiten der aus der Personalisierungsdatenquelle ausgelesenen Personalisierungsdaten durch das Nutzer-Computersystem an den Dienst-Server über den zweiten verschlüsselten Kommunikationskanal,
- Weiterleiten eines Berechtigungsnachweises des Nutzers zur Nutzung der Personalisierungsdaten als seine eigenen Personalisierungsdaten durch das Nutzer-Computersystem an den Dienst-Server über den zweiten verschlüsselten Kommunikationskanal,
- Empfangen einer zweiten Aufforderung von dem Dienst-Server durch das Nutzer-Computersystem unter Verwendung der Browseranwendung über den ersten verschlüsselten Kommunikationskanal zum Bereitstellen eines serverindividuellen Authentifizierungsschlüssels zum zukünftigen Authentifizieren des Nutzers des personalisierten Nutzerkontos, wobei die zweite Aufforderung eine ersten Challenge umfasst,
- Weiterleiten der ersten Challenge von dem Nutzer-Computersystem an einen Authentisierungstoken des Nutzers,
- Empfangen einer von dem Authentisierungstoken erstellten ersten Response auf die erste Challenge durch das Nutzer-Computersystem zusammen mit einem serverindividuellen Authentifizierungsschlüssel für den Dienst-Server in Form eines öffentlichen kryptographischen Schlüssel eines von dem Authentisierungstoken unter Verwendung eines eindeutigen Dienst-Server-Attributs erzeugten asymmetrischen kryptographischen Schlüsselpaars, wobei die erste Response eine Signatur der ersten Challenge mit einem dem Authentifizierungsschlüssel zugehörigen serverindividuellen Authentisierungsschlüssel in Form eines privaten kryptographischen Schlüssel des erzeugten asymmetrischen kryptographischen Schlüsselpaars umfasst, wobei ein Erstellen der ersten Response ein erfolgreiches Authentifizieren des Nutzers gegenüber dem Authentisierungstoken voraussetzt,
- Weiterleiten der ersten Response und des serverindividuellen Authentifizierungsschlüssels durch das Nutzer-Computersystem unter Verwendung der Browseranwendung über den ersten verschlüsselten Kommunikationskanal an den Dienst-Server zum Speichern des serverindividuellen Authentifizierungsschlüssels in Verbindung mit dem personalisierten Nutzerkonto des Nutzers, wobei die erste Response als Nachweis dient, dass der Nutzer über den zu dem Authentifizierungsschlüssel gehörigen Authentisierungsschlüssel verfügt, wobei der gespeicherte Authentifizierungsschlüssel den Dienst-Server dazu befähigt im Zuge von zukünftigen Authentifizierungen des Nutzers jeweils eine Validität einer von dem Nutzer als Authentisierungsnachweis bereitgestellten zweiten Response mit einer zweiten Signatur einer zweiten Challenge des Dienst-Servers zu prüfen, welche unter Verwendung des serverindividuellem Authentisierungsschlüssel erstellt wurde, und dem personalisierten Nutzerkonto des Nutzers zuzuordnen.

Ausführungsformen können den Vorteil haben, dass im Zuge der Registrierung des Nutzers keine Eingabe von Personalisierungsdaten durch den Nutzer erforderlich ist. Vielmehr wird ein kryptographisch abgesichertes Verfahren bereitgestellte, bei welchem die entsprechenden Personalisierungsdaten aus einer elektronischen Personalisierungsquelle ausgelesen werden. Da sich das Nutzer-Computersystem im Zuge der Registrierung mit dem Nutzer-Zertifikat gegenüber dem Dienst-Server authentisiert, weiß der Server, wer die entsprechenden Personalisierungsdaten bereitstellt. Dass der Nutzer die bereitgestellten Personalisierungsdaten auch tatsächlich zu diesem Zweck nutzen darf, d.h. dass es sich um seine Personalisierungsdaten handelt, wird durch den Berechtigungsnachweis belegt. Bei diesem Berechtigungsnachweis kann es sich beispielsweise um eine Signatur mit einem privaten kryptographischen Schlüssel handeln, welcher zu einem öffentlichen kryptographischen Schlüssel gehört, dessen Authentizität mittels eines Zertifikats abgesichert ist, welches zugleich die Authentizität der Personalisierungsdaten absichert. Die Verfügungshoheit des Nutzers über den entsprechenden privaten kryptographischen Schlüssel zum Erstellen einer Signatur belegt die Berechtigung des Nutzers zum Nutzen der Personalisierungsdaten. Alternative kann der Berechtigungsnachweis indirekt von einer vertrauenswürdigen dritten Instanz, wie etwa einem ID-Provider-Server, bereitgestellt bzw. belegt werden. Beispielsweise liest der ID-Provider-Server die Personalisierungsdaten aus und bestätigt, etwa durch eine Signatur der ausgelesenen Daten, dass diese aus der vorbestimmten Personalisierungsquelle des Nutzers ausgelesen wurden. Aus der Tatsache, dass der Nutzer die Verfügungshoheit über die entsprechende vorbestimmte Personalisierungsquelle besitzt und diese zum Auslesen der Personalisierungsdaten durch den ID-Provider-Server bereitstellt, ergibt sich die Berechtigung des Nutzers zum Nutzen der Personalisierungsdaten. Dass es sich bei dem Nutzer auch tatsächlich um den Nutzer handelt, dessen Personalisierungsdaten in der Personalisierungsquelle gespeichert sind, lässt sich durch die Notwendigkeit einer erfolgreichen Authentifizierung des Nutzers gegenüber der Personalisierungsquelle sicherstellen. Dadurch kann beispielsweise vermieden werden, dass die Personalisierungsquelle gestohlen und von einem unberechtigten Dritten verwendet wird.

Durch das Verfahren kann somit die Authentizität der bereitgestellten Personalisierungsdaten sichergestellt werden, ebenso wie der Umstand, dass die Nutzung der Personalisierungsdaten zum Zwecke der Registrierung auch tatsächlich von dem berechtigten Nutzer autorisiert wurde.

Diese Personalisierungsdaten werden zur Personalisierung des Nutzerkontos verwendet. Für zukünftigen Authentifizierungen des Nutzers wird dem Dienst-Server ein Authentifizierungsschlüssel bereitgestellt. Dieser Authentifizierungsschlüssel wird über denselben verschlüsselten Kommunikationskanal übertragen, über welchen zuvor die Implementierung des Authentifizierungsmechanismus initiiert wurde, d.h. über welche die Registrierungswebseite aufgerufen wurde. Das bedeutet, dass dieselben ephemeren Schlüssel zur Verschlüsselung der Übertragung verwendet werden. Über diese Schlüssel verfügt neben dem Dienst-Server aber nur das Nutzer-Computersystem, welches durch die erfolgreiche Bereitstellung der authentischen Personalisierungsdaten nachgewiesen hat, dass es ein berechtigter und befähigter Vermittler der entsprechenden Personalisierungsdaten ist. Somit wird der Authentifizierungsschlüssel basierend auf der Übertragung über denselben verschlüsselten Kommunikationskanal in kryptographisch abgesicherter Weise mit den Personalisierungsdaten verknüpft. Diese Verknüpfung wird seitens des Dienst-Servers fixiert, indem der Dienst-Servers den serverindividuellen Authentifizierungsschlüssels in Verbindung mit dem zuvor personalisierten Nutzerkonto des Nutzers speichert. Somit ist der Authentifizierungsschlüssel, welcher selbst keine personenbezogenen Daten des Nutzers darstellt und/oder offenbart, seitens des Dienst-Servers mit den Personalisierungsdaten verknüpft. Der Authentifizierungsschlüssel kann es dem Dienst-Server mithin ermöglichen einen authentifizierten Nutzer als den Nutzer, dem die Personalisierungsdaten zugeordnet sind, zu identifizieren. Mithin kann eine personalisierte Authentisierung/Authentifizierung des Nutzers ermöglicht werden, ohne das personenbezogene Daten im Zuge der Authentisierung/Authentifizierung übertragen werden. Jeder andere, außer dem Dienst-Server, kann die im Zuge einer Authentisierung übertragenen Daten, etwa eine mit dem Authentisierungsschlüssel verschlüsselte Response im Zuge eines Challenge-Response-Protokolls, keinen personenbezogenen Daten zuordnen.

Die Verwendung eines eindeutigen Dienst-Server-Attributs beim Erzeugen des asymmetrischen Schlüsselpaars aus Authentisierungsschlüssel und Authentifizierungsschlüssel kann sicherstellen, dass für unterschiedliche Dienst-Server unterschiedliche und damit serverindividuelle Schlüsselpaare erzeugt werden.

Ausführungsformen können den weiteren Vorteil haben, dass bei einer Verwendung von serverindividuellen kryptographischen Schlüsseln für den Empfänger nicht ersichtlich oder bestimmbar ist, über welche weiteren Authentisierungsmöglichkeiten bei welchen weiteren Dienst-Servern das Authentisierungstoken und damit der Nutzer verfügt. Das vorliegende Implementierungsverfahren kann beispielsweise gegenüber einer Mehrzahl von Dienst-Servern ausgeführt werden, wobei sich der Nutzer bei jedem der Dienst-Serverjeweils registriert und der Authentisierungstoken für jeden der Dienst-Server jeweils ein serverindividuelles asymmetrisches kryptographisches Schlüsselpaar bestehend aus einem Authentisierungsschlüssel und einem Authentifizierungsschlüssel erstellt. Der Authentisierungstoken kann somit über eine Mehrzahl von serverindividuellen Authentisierungsschlüssein zum Authentisieren des Nutzers gegenüber dem jeweiligen Dienst-Server einer Mehrzahl von Dienst-Servern. Aus den individuellen Authentifizierungsmechanismen können die jeweiligen Dienst-Server bzw. Web-Dienste keinerlei Rückschluss auf andere Authentifizierungsmechanismen bzw. Authentisierungsmöglichkeiten des Authentisierungstokens bzw. des Nutzers des Authentisierungstokens gegenüber anderen Dienst-Servern bzw. Web-Diensten erlangen.

Schließlich ermöglicht eine Verwendung von einem Challenge-Response-Verfahren unter Verwendung eines in elektronsicher und kryptographisch gesicherter Form mittels eines Authentisierungstokens bereitgestellten Authentisierungsschlüssel eine voll elektronische und sichere Authentisierung bzw. Authentifizierung des Nutzers. Beispielsweise muss der Nutzer keine Daten zur Authentisierung eingegeben. Aber selbst wenn der Nutzer beispielsweise eine PIN zum Authentisieren gegenüber dem Authentisierungstoken eingibt, um diesen bzw. den in diesem gespeicherten Authentisierungsschlüssel für Authentisierungszwecke gegenüber einem Dienst-Server nutzen zu können, muss sich der Nutzer nur eine PIN merken, um beispielsweise eine Mehrzahl von gespeicherten Authentisierungsschlüssel für eine Mehrzahl von Dienst-Servern nutzen zu können. Ferner kann dieser Ansatz mehr Sicherheit bieten, da selbst bei einem Ausspähen der PIN, kein Missbrauch möglich ist, solange sich der Authentisierungstoken im Besitz des Nutzers befindet.

Authentisierung bezeichnet ein Bereitstellen eines Nachweises für eine behauptete Eigenschaft, wie etwa einer Eigenschaft eines Nutzers. Authentifizieren bezeichnet ein Verifizieren der behaupteten Eigenschaft unter Verwendung des bereitgestellten Nachweises. Eine erfolgreiche Authentifizierung des Nutzers bezüglich der behaupteten Eigenschaft, beispielsweise der Authentizität seiner Person bzw. Identität, erlaubt es dem authentifizierten Nutzer weitere Aktionen durchzuführen. Beispielsweise werden dem Nutzer Zugangsrechte eingeräumt. Ein erfolgreich authentifizierter Nutzer gilt als authentisch. Eine abschließende Bestätigung einer Authentifizierung kann eine Autorisierung umfassen.

Unter einem Authentisierungsschlüssel wird hier ein kryptographischer Schlüssel verstanden, wie beispielsweise ein privater kryptographischer Schlüssel eines asymmetrischen Schlüsselpaars, welcher zum Bereitstellen eines Nachweises für eine behauptete Eigenschaft verwendet wird, beispielsweise zum Erstellen einer Response auf eine Challenge im Zuge eines Challenge-Response-Verfahrens. Der Authentisierungsschlüssel wird nach seiner Erzeugung durch das Authentisierungstoken beispielsweise in einem geschützten Speicherbereich des Authentisierungstoken gespeichert.

Unter einem Authentifizierungsschlüssel wird hier ein kryptographischer Schlüssel verstanden, wie beispielsweise ein öffentlicher kryptographischer Schlüssel eines asymmetrischen Schlüsselpaars, welcher zum Verifizieren eines Nachweises für eine behauptete Eigenschaft verwendet wird, beispielsweise zum Verifizieren einer Response auf eine Challenge im Zuge eines Challenge-Response-Verfahrens. Der Authentifizierungsschlüssel wird nach seiner Erzeugung durch das Authentisierungstoken beispielsweise in dem Speicher des Authentisierungstoken gespeichert und im Zuge des Implementierens des Authentifizierungsmechanismus an den Dienst-Server gesendet.

Eine Authentifizierung des Nutzers gegenüber der Personalisierungsdatenquelle und/oder dem Authentisierungstoken kann auf verschiedene Weisen erfolgen. Der Nutzer kann beispielsweise unter Verwendung eines Authentifizierungssensors einen Nachweis einer Kenntnis, wie einer PIN oder einem Passwort, einen Nachweis eines Besitzes, wie etwa eines kryptographischen Schlüssels, eines Zertifikats oder eines elektronischen Geräts und/oder einen Nachweis von Eigenschaften seiner Person selbst, wie biometrische Merkmale oder Verhaltensmerkmale erbringen.

Der Authentifizierungssensor kann beispielsweise von der Personalisierungsdatenquelle bzw. dem Authentisierungstoken und/oder von dem Nutzer-Computersystem bereitgestellt werden, welches mit der Personalisierungsdatenquelle bzw. dem Authentisierungstoken kommunikativ verbunden ist oder diese umfasst.

Unter einem Authentifizierungssensor wird ein Sensor zum Erfassen von Authentisierungsdaten bzw. Nachweisen zum Zwecke einer Authentisierung des Nutzers verstanden, anhand derer der Nutzer authentifiziert werden kann. Die Authentisierungsdaten können beispielsweise biometrische Daten des Nutzers umfassen. Der Authentifizierungssensor kann beispielsweise zum Erfassen biometrischer Daten des Nutzers konfiguriert sein. Biometrische Daten können beispielsweise umfassen: Fingerabdruckdaten, Körpergeometriedaten/Anthropometriedaten, wie etwa Gesichts-, Hand-, Ohrgeometriedaten, Handlinienstrukturdaten, Venenstrukturdaten, wie etwa Handvenenstrukturdaten, Irisdaten, Retinadaten, Stimmerkennungsdaten, Nagelbettmuster. Der Authentifizierungssensor kann beispielsweise zum Erfassen von Verhaltensdaten des Nutzers, wie etwa grob- und/oder feinmotorische Bewegungsmuster. Grobmotorische Bewegungsmuster sind beispielsweise Bewegungsmuster des Nutzers beim Gehen oder beim Bewegen der Arme. Feinmotorische Bewegungsmuster sind beispielsweise Bewegungsmuster des Nutzers beim Bewegen von Händen, Fingern oder Kopf. Beispielsweise ist der Authentifizierungssensor dazu konfiguriert vom Nutzer getragen zu werden, beispielsweise in der Hand, am Kopf oder anderweitig am Körper, und bei Bewegungen des Nutzers mitbewegt zu werden und so die Bewegungen des Nutzers als Authentisierungsdaten zum Zwecke einer Authentifizierung zu erfassen. Die Authentisierungsdaten können beispielsweise ein Wissen des Nutzers umfassen, wie eine PIN oder Passwort. Der Authentifizierungssensor kann eine Eingabevorrichtung zur Eingabe von Authentisierungsdaten, wie etwa eine PIN oder ein Passwort, umfassen. Die Eingabevorrichtung kann beispielsweise eine Tastatur und/oder einen Touchscreen umfassen.

Eine Webseite bezeichnet ein von einem Server zum Abruf über das Internet bzw. World Wide Web bereitgestelltes Dokument, welches mit einer Browseranwendung unter Angabe einer Adresse bzw. Uniform Resource Identifier (URI), wie etwa einer Uniform Resource Locators (URL), der Webseite abgerufen werden kann. Webseiten bestehen zumeist aus strukturiertem Text, in zudem Bilder sowie Ton und/oder Videodateien eingebunden sein können. Eine Webseite kann ferner Links, d.h. Verweise, auf andere Webseiten oder Inhalte umfasse. Webseiten können statische vorgegebene oder dynamisch erzeugte Inhalte haben. Bei den Verweisen kann es sich beispielsweise um einen URI zum Aufruf eines Webservices handeln. Ein Webservice bzw. Web-Dienst stellt beispielsweise eine Schnittstelle für eine Maschine-zu-Maschine- oder Anwendungs-Kommunikation, etwa auf Basis von HTTPS, über ein Netzwerk wie das Internet zur Verfügung. Dabei können beispielsweise Daten ausgetauscht und auf entfernten Computersystemen, wie etwa Servern, Funktionen aufgerufen werden. Ein Web-Dienst besitzt einen URI, über den der Web-Dienst eindeutig identifizierbar ist. Ferner kann der Web-Dienst eine Schnittstellenbeschreibung in maschinenlesbarem Format aufweisen, etwa als XML-Artefakt wie beispielsweise WSDL. Die Schnittstellenbeschreibung legt fest, wie mit dem Web-Dienst zu interagieren ist. Die Kommunikation kann beispielsweis über Protokolle aus dem Internetkontext wie HTTPS laufen. Sie kann beispielsweise XML- oder JSON-basiert sein.

Asymmetrische Schlüsselpaare werden für eine Vielzahl von Kryptosystemen eingesetzt und spielen bei der sicheren Übertragung elektronischer Daten eine wichtige Rolle. Ein asymmetrisches Schlüsselpaar besteht aus einem öffentlichen Schlüssel, welcher zur Ver- und/oder Entschlüsselung von Daten verwendet wird und an Dritte, beispielsweise an einen Sender oder Empfänger von Daten, weitergegeben werden darf, sowie einem privaten Schlüssel, welcher zur Ver- und/oder Entschlüsselung aber auch zur Signatur von Daten verwendet wird und im Regelfall geheim gehalten werden muss. Der öffentliche Schlüssel ermöglicht es jedermann Daten für den Inhaber des privaten Schlüssels zu verschlüsseln oder mit dem privaten Schlüssel erstellte digitale Signaturen zu prüfen. Ein privater Schlüssel ermöglicht es seinem Inhaber mit dem öffentlichen Schlüssel verschlüsselte Daten zu entschlüsseln oder digitale Signaturen von Daten zu erstellen.

Eine digitale Signatur von Daten umfasst beispielsweise ein Bilden eines Prüfwerts der Daten, wie etwa eines Hashwerts, welcher mit einem als Signaturschlüssel verwendeten privaten kryptographischen Schlüssel eines asymmetrischen Schlüsselpaars verschlüsselt wird. Im Falle einer Signatur kennt nur der Signierende den zum Erstellen der Signatur verwendeten privaten kryptographischen Schlüssel, d.h. Signaturschlüssel, des für die Signatur verwendeten asymmetrischen Schlüsselpaars. Der Signaturempfänger verfügt lediglich über den öffentlichen Schlüssel, d.h. Signaturprüfschlüssel, des für die Signatur verwendeten asymmetrischen Schlüsselpaars. Der Signaturempfänger kann die Signatur mithin prüfen, aber nicht selbst berechnen. Für eine Signaturprüfung berechnet der Signaturempfänger beispielsweise den Prüfwert der signierten Daten und vergleicht diesen mit dem Ergebnis einer Entschlüsselung der Signatur unter Verwendung des Signaturprüfschlüssels. Stimmt der berechnet Hashwert mit dem Ergebnis der Entschlüsselung überein ist die Signatur korrekt. Wird zudem die Authentizität des Signaturprüfschlüssels, etwa durch ein Zertifikat, insbesondere ein PKI-Zertifikat, bestätigt, ist die Signatur valide.

Unter einem "Zertifikat" wird hier ein digitales Zertifikat verstanden, welches auch als Public-Key-Zertifikat (PKI-Zertifikat) bezeichnet wird. Bei einem Zertifikat handelt es sich um strukturierte Daten, die dazu dienen, einen öffentlichen Schlüssel eines asymmetrischen Kryptosystems einer Identität, wie zum Beispiel einer Person, Institution oder einer Vorrichtung, zuzuordnen. Zur kryptographischen Sicherung und zum Nachweis der Authentizität der Daten des Zertifikates, sind diese von einem Zertifikatsaussteller signiert. Durch PKI-Zertifikate, welche auf asymmetrischen Schlüsselpaaren basieren, und bis auf ein Root- bzw. Wurzelzertifikat jeweils von einem Zertifikatsaussteller mit einem Signaturschlüssel signiert sind, dessen zugehöriger Signaturprüfschlüssel dem Zertifikatsaussteller durch ein PKI-Zertifikat des entsprechenden Zertifikataussteller zugeordnet ist, wird eine so genannte Public Key Infrastructure (PKI) realisiert. Beispielsweise kann das Zertifikat dem Standard X.509 oder einem anderen Standard entsprechen. Beispielsweise handelt es sich bei dem Zertifikat um ein Card Verifiable Certificate (CVC). Ein Berechtigungszertifikat umfasst strukturierte Daten, welche zusätzlich Rechte der Identität definieren.

Die PKI stellt ein System zum Ausstellen, Verteilen und Prüfen digitaler Zertifikate bereit. Ein digitales Zertifikat kann in einem asymmetrischen Kryptosystem die Authentizität eines öffentlichen kryptographischen Schlüssels und seinen zulässigen Anwendungs- und Geltungsbereich bestätigen. Das digitale Zertifikat ist selbst durch eine digitale Signatur geschützt, deren Echtheit bzw. Authentizität mit dem öffentlichen Schlüssel des Ausstellers des Zertifikates geprüft werden kann. Um die Authentizität des Ausstellerschlüssels zu prüfen, wird wiederum ein digitales Zertifikat verwendet. Auf diese Weise lässt sich eine Kette von digitalen Zertifikaten aufbauen, die jeweils die Authentizität des öffentlichen Schlüssels bestätigen, mit dem das vorhergehende Zertifikat geprüft werden kann. Eine solche Kette von Zertifikaten bildet einen sogenannten Validierungspfad oder Zertifizierungspfad. Auf die Echtheit des letzten Zertifikats, des sogenannten Wurzelzertifikats, und des dadurch zertifizierten Schlüssels, müssen sich die Teilnehmer der PKI beispielsweise ohne ein weiteres Zertifikat verlassen können. Das Wurzelzertifikat wird von einer sogenannten Wurzelzertifizierungsinstanz verwaltet, auf deren als gesichert vorausgesetzten Authentizität die Authentizität aller Zertifikate der PKI zurückgeht.

Digitale Zertifikate werden beispielsweise durch eine unabhängige, glaubwürdige Instanz (Zertifizierungsdienstanbieter/ZDA oder Vertrauensdienstanbieter/VDA), d.h. die das Zertifikat zuteilende Zertifizierungsstelle, bestätigen. Zertifikate können einem breiten Personenkreis zur Verfügung gestellt werden, um diesem eine Prüfung elektronischer Signaturen auf Authentizität und Gültigkeit zu ermöglichen. Ein Zertifikat kann einer elektronischen Signatur zugeordnet sein und einen Signaturprüfschlüssel in Form des öffentlichen Schlüssels bereitstellen, wenn der zu dem Signaturprüfschlüssel gehörende private Schlüssel als Signaturschlüssel verwendet wurde. Dadurch, dass ein ZDA /VDA ein Zertifikat in Assoziation mit einem öffentlichen Schlüssel der Allgemeinheit zur Verfügung stellt, ermöglicht sie es den Nutzern asymmetrischer Kryptosysteme den öffentlichen Schlüssel einer Identität, beispielsweise einer Person, einer Organisation, oder Computersystem, zuzuordnen.

Ein Challenge-Response-Verfahren stellt ein sicheres Authentifizierungsverfahren einer ersten Instanz gegenüber einer zweiten Instanz auf Basis von Wissen dar. Beispielsweise wird kann der Nutzer unter Verwendung eines Challenge-Response-Verfahrens authentifiziert. Durch das Challenge-Response-Verfahrens wird beispielsweise der Besitz eines Authentisierungsschlüssels seitens des Nutzers, etwa in einem Authentisierungstoken, nachgewiesen.

Beispielsweise stellt die Response zugleich eine Bestätigung einer erfolgreichen Nutzerauthentifizierung durch Authentisierungstoken dar, falls die Response nur unter der Voraussetzung einer erfolgreichen Nutzerauthentifizierung durch den Authentisierungstoken erzeugt wird. Somit weiß der Dienst-Server, im Falle eines erfolgreichen Challenge-Response-Verfahrens beispielsweise nicht nur, dass die Nutzerauthentifizierung bestätigt wird, sondern dass diese durch den Authentisierungstoken bestätigt wird und somit valide ist.

Im Zuge eines Challenge-Response-Verfahren stellt eine erste Instanz einer zweiten Instanz eine Aufgabe ("Challenge"), für welche die zweite Instanz eine korrekte Antwort ("Response") liefern muss. Durch das Bereitstellen der korrekten Antwort beweist die zweite Instanz, dass sie eine bestimmte Information, bei der es sich um ein Geheimnis handelt, kennt. Die erste Instanz verfügt über Mittel, die Korrektheit der Antwort verifizieren. Vorteil ist dabei, dass das Geheimnis nicht mit übertragen wird und somit durch den Datenaustausch in Zuge des Challenge-Response-Verfahrens auch nicht kompromittiert werden kann.

Beispielsweise erzeugt die erste Instanz eine Zufallszahl ("Nonce") und sendet diese als Challenge an die zweite Instanz. Die zweite Instanz verwendet das Geheimnis für eine kryptographische Transformation des Nonce und sendet das Resultat als Response zum Zwecke einer Authentifizierung der zweiten Instanz an die erste Instanz. Beispielsweise wird das Nonce verschlüsselt. Zusätzlich kann das Nonce beispielswiese zusätzlichen Daten kombiniert werden. Beispielsweise kann das gemeinsame Geheimnis, etwa ein privater kryptographischer Schlüssel, zum Verschlüsseln des Nonce verwendet werden. Die erste Instanz, welche sowohl das Nonce als auch Mittel zum Entschlüsseln der Response, wie etwa einem dem zur Verschlüsselung verwendeten privaten kryptographischer Schlüssel zugeordneten öffentlichen kryptographischer Schlüssel, kennt, kann beispielsweise eine inverse Berechnung wie die zweite Instanz ausführen, z.B. das verschlüsselte Nonce entschlüsseln und mit dem als Challenge gesendeten Nonce abgleichen. Stimmt das Ergebnis der Berechnung durch die erste Instanz mit der Challenge überein, ist das Challenge-Response-Verfahren erfolgreich und die zweite Instanz erfolgreich authentifiziert.

Bei einem Computer bzw. einem Computersystem kann es sich zum Beispiel um einen stationären Computer, wie etwa einen Personal Computer (PC), Serviceterminal oder einen Server, oder um einen mobilen tragbaren Computer, wie etwa einen Laptop, ein Tablet, ein Smartphone oder einen andern Smart Device, handeln. Der Computer kann eine Schnittstelle zur Verbindung mit dem Netzwerk umfassen, wobei es sich bei dem Netzwerk um ein privates oder öffentliches Netzwerk handeln kann, insbesondere das Internet. Je nach Ausführungsform kann diese Verbindung auch über ein Mobilfunknetz hergestellt werden.

Unter einem "Nutzer-Computersystem" wird hier ein Computersystem verstanden, auf welches der Nutzer Zugriff hat. Hierbei kann es sich zum Beispiel um eine Desktop-Computer (PC), ein Serviceterminal, oder ein mobiles tragbares Kommunikationsgerät, wie etwa ein Laptop, ein Tablet, ein Smartphone oder einen anderen Smart Device handeln.

Unter einem "Dienst-Server" wird hier ein Server bzw. ein Computersystem verstanden, auf welchem ein Serverprogramm ausgeführt wird und das die Möglichkeit bereitstellt einen angebotenen Dienst über ein Netzwerk zu initiieren bzw. in Anspruch zu nehmen und/oder auszuführen.

Unter einem "Programm" bzw. "Programminstruktionen" wird hier ohne Einschränkung jede Art von Computerprogramm verstanden, welches maschinenlesbare Instruktionen zur Steuerung einer Funktionalität des Computers umfasst.

Unter einem "Prozessor" wird hier und im Folgenden eine Logikschaltung verstanden, die zur Ausführung von Programminstruktionen dient. Die Logikschaltung kann auf einem oder mehreren diskreten Bauelementen implementiert sein, insbesondere auf einem Chip. Insbesondere wird unter einem "Prozessor" ein Mikroprozessor oder ein Mikroprozessorsystem aus mehreren Prozessorkernen und/oder mehreren Mikroprozessoren verstanden.

Unter einem "Speicher" werden hier sowohl flüchtige als auch nicht flüchtige elektronische Speicher bzw. digitale Speichermedien verstanden.

Unter einem "nichtflüchtigen Speicher" wird hier ein elektronischer Speicher zur dauerhaften Speicherung von Daten, insbesondere von statischen kryptographischen Schlüsseln, Attributen oder Kennungen, verstanden. Ein nichtflüchtiger Speicher kann als nichtänderbarer Speicher konfiguriert sein, der auch als Read-Only Memory (ROM) bezeichnet wird, oder als änderbarer Speicher, der auch als Non-Volatile Memory (NVM) bezeichnet wird. Insbesondere kann es sich hierbei um ein EEPROM, beispielsweise ein Flash-EEPROM, kurz als Flash bezeichnet, handeln. Ein nichtflüchtiger Speicher zeichnet sich dadurch aus, dass die darauf gespeicherten Daten auch nach Abschalten der Energieversorgung erhalten bleiben.

Unter einem "geschützten Speicherbereich" wird hier ein Bereich eines elektronischen Speichers verstanden, auf den ein Zugriff, das heißt ein Lesezugriff oder ein Schreibzugriff, nur über einen Prozessor des entsprechenden Computersystems oder eines von dem entsprechenden Computersystem umfassten Sicherheitsmodul möglich ist. Nach Ausführungsformen ist der Zugriff von dem mit dem Speicher gekoppelten Prozessor nur dann möglich, wenn eine hierzu erforderliche Bedingung erfüllt ist. Hierbei kann es sich zum Beispiel um eine kryptografische Bedingung, insbesondere eine erfolgreiche Authentifizierung und/oder eine erfolgreiche Berechtigungsprüfung, handeln.

Unter einer "Schnittstelle" bzw. "Kommunikationsschnittstelle" wird hier eine Schnittstelle verstanden, über die Daten empfangen und gesendet werden können, wobei die Kommunikationsschnittstelle kontaktbehaftet oder kontaktlos konfiguriert sein kann. Eine Kommunikationsschnittstelle kann beispielsweise eine Kommunikation über ein Netzwerk ermöglichen. Je nach Konfiguration kann eine Kommunikationsschnittstelle beispielsweise eine kabellose Kommunikation nach einem Mobilfunkstandard, Bluetooth-, RFID-, WiFi und/oder NFC-Standard bereitstellen. Je nach Konfiguration kann eine Kommunikationsschnittstelle beispielsweise eine kabelbasierte Kommunikation bereitstellen. Bei der Kommunikationsschnittstelle kann es sich um eine interne Schnittstelle oder um eine externe Schnittstelle handeln.

Bei den verschlüsselten Kommunikationskanälen handelt es sich beispielsweise um verschlüsselten Ende-zu-Ende-Verbindung. Unter einer "verschlüsselten Ende-zu-Ende-Verbindung" bzw. einem "verschlüsselten Ende-zu-Ende-Übertragungskanal" wird hier eine Verbindung zwischen einem Sender und einem Empfänger mit einer Ende-zu-Ende-Verschlüsslung verstanden, bei der zu übertragende Daten vom Sender verschlüsselt und erst vom Empfänger wieder entschlüsselt werden. Die Verschlüsselung übertragener Daten erfolgt somit über alle Übertragungsstationen hinweg, sodass Zwischenstationen aufgrund der Verschlüsslung keine Kenntnis vom Inhalt der übertragenen Daten erlagen können. Die Verbindung wird durch die Verschlüsselung kryptografisch abgesichert, um ein Ausspähen und/oder eine Manipulation der Übertragung zu verhindern, wobei hierzu ein sogenanntes Secure-Messaging-Verfahren eingesetzt werden kann. Eine Ende-zu-Ende-Verschlüsslung beruht beispielsweise auf zwei symmetrischen kryptographischen Schlüsseln, wobei ein erster der symmetrischen Schlüssel zum Verschlüsseln von Nachrichten und ein zweiter der symmetrischen Schlüssel zum Authentifizieren des Senders der Nachricht, etwa mittels Message Authentication Code (MAC)-Algorithmen, dient. Beispielsweise werden für einen verschlüsselten Kommunikationskanal im Zuge des Aufbaus ephemere Schlüssel zur Verschlüsselung ausgehandelt, welche mit einer Beendigung des Kommunikationskanals ihre Gültigkeit verlieren. Eine Verwendung unterschiedlicher ephemerer Schlüssel für unterschiedliche Kommunikationskanäle ermöglicht es eine Mehrzahl von Kommunikationskanälen parallel zueinander zu betreiben.

Ein verschlüsselter Kommunikationskanal kann beispielsweise unter Verwendung des Transport Layer Security (TLS) Protokolls aufgebaut werden, beispielsweise als Teil des Hypertext Transfer Protocol Secure (HTTP) Protokolls.

"Personalisierungsdaten" sind Daten zum Personalisieren eines Nutzerkontos des Nutzers bei einem Dienst-Server. Der Dienst-Server kann den Nutzer anhand der Personalisierungsdaten beispielsweise Identifizieren und/oder verwendet diese zum Erbringen personenbezogene Dienste. Personalisierungsdaten umfassen beispielsweise ein oder mehrere Attribute des Nutzers, bei welchen es sich um personenbezogene Daten des Nutzers handelt, wie etwa Name, Vorname, Anschrift, beispielsweise Land, Stadt, Straße und/oder Hausnummer, Telefonnummer, E-Mail-Adresse und/oder Geburtsdatum. Personenbezogene Daten bezeichnen Daten, welche eine Identifikation einer Person ermöglichen oder einer Person zuordenbar sind, auf welche die personenbezogenen Daten bezogen sind.

Ausführungsformen können den Vorteil haben, eine Registrierung eines Nutzers bei einem von einem Dienst-Server bereitgestellten Web-Dienst unter Verwendung einer elektronischen Identität bereitzustellen, welche verbunden wird mit einem server- und damit dienstindividuellen Schlüsselpaar. Das Schlüsselpaar ist ferner nutzerspezifisch und aufgrund der Verbindung zu den im Zuge der Registrierung hinterlegten Personalisierungsdaten personalisiert. Unter Verwendung des Schlüsselpaars wird eine wiederholte Authentisierung gegenüber dem Dienst-Server bzw. Web-Dienst ohne Übertragung personengebundener Daten, wie beispielsweise Benutzername, Passwort oder Identitätsattribute ermöglicht. Zur Authentisierung unter Verwendung des Schlüsselpaars kann beispielsweise ein Challenge-Response-Verfahren verwendet werden.

Ausführungsformen können den Vorteil haben, dass das Verfahren zum Implementieren des Authentifizierungsmechanismus eine direkte kryptographische Verknüpfung eines Registrierungsprozesses unter Verwendung einer elektronischen Identität basierend auf den Personalisierungsdaten mit einer Initialisierung eines des serverindividuellen Schlüsselpaars aus Authentisierungs- und Authentifizierungsschlüssel bereitstellt. Durch das Bereitstellen der Personalisierungsdaten für den Dienst-Server erfolgt eine Identifizierung des Nutzers gegenüber dem Dienst-Server.

Das Verfahren kann somit unter Verwendung des serverindividuellen kryptographischen Schlüsselpaars eine sichere Identifizierung des Nutzers anhand der hinterlegten Personalisierungsdaten ermöglichen.

Ferner können Ausführungsformen den Vorteil haben, keine Verwendung zusätzlicher Dienste zum Ausführen einer Authentisierung des Nutzers gegenüber dem Dienst-Server bzw. einer Authentifizierung des Nutzers durch den Dienst-Server unter Verwendung des initialisierten serverindividuellen Schlüsselpaars aus Authentisierungs- und Authentifizierungsschlüssel zu benötigen. Der implementierte Authentifizierungsmechanismus benötigt nach Ausführungsformen für eine Authentisierung des Nutzers gegenüber dem Dienst-Server lediglich das Authentisierungstoken mit dem Authentisierungsschlüssel, während der Dienst-Server den Nutzer beispielsweise allein durch Verwendung des Authentifizierungsschlüssel authentifizieren kann. Mit anderen Worten können Authentisierungstoken und Dienst-Server für eine erfolgreiche Authentisierung/Authentifizierung genügen.

Nach Ausführungsformen kann ferner eine Key-Attestation bzw. Schlüssel-Attestierung für die Schlüssel des Authentisierungstokens implementiert werden, welche es dem Dienst-Server ermöglichen kann das für den Authentifizierungsmechanismus verwendete Schlüsselpaar aus Authentisierungs- und Authentifizierungsschlüssel zu bewerten. Im Zuge einer Schlüssel-Attestierung wird beispielsweise von der die Schlüssel verwaltenden bzw. speichernden Hardware direkt unter Verwendung einer kryptographischen Signatur bestätigt, wie die Schlüssel erzeugt, gespeichert und/oder verwaltet werden. Die Schlüssel-Attestierung kann mithin einem Nachweis eines Sicherheitsniveaus der Schlüssel dienen. Durch die Möglichkeit einer Attestierung der jeweiligen Hardware des Authentisierungstokens oder gerätespezifischen Implementierung kann der Dienst-Server bzw. Web-Dienst in die Lage versetzt werden, sich über das Sicherheitsniveau der verwendeten Token ein Bild zu machen und über die Akzeptanz dieser Token für den weiteren Prozess zu entscheiden.

Nach Ausführungsformen stellt der Authentifizierungsmechanismus unter Verwendung eines Authentisierungstokens eine zertifikatslose Authentisierung des Nutzers gegenüber einem Dienst-Server bereit. Zertifikate werden beispielsweise nur zur Implementierung des Authentifizierungsmechanismus verwendet, d.h. initial. Sobald der Mechanismus implementiert ist, benötigt der Nutzer zum Authentisieren gegenüber dem Dienst-Server nur den serverindividuellen Authentisierungsschlüssel des Authentisierungstokens. Bei diesem serverindividuellen Authentisierungsschlüssel handelt es sich um den serverindividuellen privaten kryptographischen Schlüssel des Authentisierungstokens, welcher dem serverindividuellen öffentlichen kryptographischen Schlüssel zugehörig ist, der dem Dienst-Server im Zuge des Implementierens des Authentifizierungsmechanismus als Authentifizierungsschlüssel zum Authentifizieren des Nutzers zur Verfügung gestellt wurde. Der serverindividuellen Authentisierungsschlüssel wird zum Erzeugen einer Signatur zum Authentifizieren des Nutzers gegenüber dem Dienst-Server verwendet. Bei der Signatur handelt es sich beispielsweise um eine Signatur einer Challenge im Zuge eines Challenge-Response-Verfahrens.

Eine Kommunikation zwischen dem Nutzer-Computersystem und dem Dienst-Server erfolgt beispielsweise unter Verwendung des HTTPS-Protokolls. Die Kommunikation ist beispielsweise ende-zu-ende-verschlüsselt.

Die Personalisierungsdaten werden beispielsweise unter Verwendung des SAML-Protokolls bereitgestellt. Bei der ersten Aufforderung des Dienst-Servers handelt es sich beispielsweise um ein SAML-Request, in Antwort auf welches die ausgelesenen Personalisierungsdaten in Form einer SAML Response bereitgestellt werden. SAML (Security Assertion Markup Language) ist ein XML-Framework zum Austausch von Authentifizierungs- und Autorisierungsinformationen, welches Funktionen bereitstellt, um sicherheitsbezogene Informationen zu beschreiben und zu übertragen.

Beispielsweise werden die Personalisierungsdaten unter Verwendung des SOAP-Protokolls bereitgestellt. SOAP (Simple Object Access Protocol) ist ein Netzwerkprotokoll, mit dessen Hilfe Daten zwischen Systemen ausgetauscht und Remote Procedure Calls durchgeführt werden können.

Nach Ausführungsformen handelt es sich bei dem eindeutigen Dienst-Server-Attribut um eine Adresse des Dienst-Servers, beispielsweise einen Domain-Name oder Sub-Domain-Namen. Die Verwendung eines eindeutigen Dienst-Server-Attributs beim Erzeugen des asymmetrischen Schlüsselpaars aus Authentisierungsschlüssel und Authentifizierungsschlüssel kann sicherstellen, dass für unterschiedliche Dienst-Server unterschiedliche und damit serverindividuelle Schlüsselpaare erzeugt werden.

Nach Ausführungsformen wird das serverindividuelle asymmetrische kryptographische Schlüsselpaar unter Verwendung eines Geheimnisses des Authentisierungstokens erzeugt. Ausführungsformen können den Vorteil haben, dass sichergestellt werden kann, dass das erzeugt asymmetrische kryptographische Schlüsselpaar nicht nur serverindividuelle, sondern zudem auch tokenindividuell ist, d.h. eindeutig für den Authentisierungstokens. Das Geheimnis des Authentisierungstokens, wie etwa eine Zufallszahl, wird als Eingabe, beispielsweise in Kombination mit dem Dienst-Server-Attribut, für einen Schüsselerzeugungsalgorithmus zum Erzeugen des asymmetrischen kryptographischen Schlüsselpaars verwendet. Solange das entsprechende Geheimnis keinem anderen bekannt ist, kann sichergestellt werden, dass das asymmetrische kryptographische Schlüsselpaar nicht dupliziert werden kann.

Nach Ausführungsformen handelt es sich bei dem Authentisierungstoken beispielsweise um einen FIDO2-Token gemäß dem FIDO2-Standard der FlDO-Allianz und des W3C zum Authentifizieren über das Internet. FIDO2 basiert auf dem W3C-Web-Authentication-Standard (WebAuthn) für eine Kommunikation zwischen Server und Browser und dem Client to Authenticator Protocol (CTAP) der FIDO-Allianz, welches eine Kommunikation zwischen Browser und Authentisierer beschreibt. Zusammengenommen spezifizieren das WebAuthn und CTAP Protokoll eine Authentifizierung eines Nutzers durch den Server mittels des Authentisierers.

Nach Ausführungsformen handelt es sich bei der Personalisierungsdatenquelle um einen Speicher des Nutzer-Computersystems und das Auslesen der Personalisierungsdatenquelle erfolgt durch das Nutzer-Computersystem.

Nach Ausführungsformen umfasst das Nutzer-Zertifikat die bereitzustellenden Personalisierungsdaten des Nutzers sowie einen dem Nutzer zugeordneten öffentlichen kryptographischen Schlüssel. Als Berechtigungsnachweis des Nutzers zur Nutzung der Personalisierungsdaten wird eine durch das Nutzer-Computersystem unter Verwendung eines dem öffentlichen kryptographischen Schlüssel des Nutzers zugehörigen privaten kryptographischen Schlüssels erstellte Signatur der Personalisierungsdaten verwendet.

Ausführungsformen können den Vorteil haben, dass durch das Nutzer-Zertifikat eine kryptographisch gesicherte Verknüpfung zwischen den Personalisierungsdaten und dem asymmetrischen Schlüsselpaar des Nutzers implementiert wird, dessen öffentlichen kryptographischen Schlüssel das Nutzer-Zertifikat umfasst ist. Das Nutzer-Zertifikat kann beispielsweise den Besitzer des zugehörigen privaten kryptographischen Schlüssels zur Nutzung der Personalisierungsdaten, beispielsweise für eine Registrierung bei einem Dienst-Server berechtigen. Als Berechtigungsnachweis kann in diesem Fall eine Signatur der Personalisierungsdaten mit dem entsprechenden privaten kryptographischen Schlüssel dienen. Aus der Verfügungshoheit des Nutzers über den entsprechenden privaten kryptographischen Schlüssel ergibt sich auf Grundlage des Nutzer-Zertifikats ein Nachweis dafür, dass die Nutzung der Personalisierungsdaten durch eine berechtigte Person erfolgt, nämlich den Nutzer, um dessen Personalisierungsdaten es sich handelt. Das Nutzer-Zertifikat ist beispielsweise in dem Speicher des Nutzer-Computersystems gespeichert und wird im Zuge des Aufbaus des zweiten verschlüsselten Kanals von dem Nutzer-Computersystem an den Dienst-Server gesendet. Das der Nutzer-Zertifikat zugehörige private kryptographische Schlüssel des Nutzers ist beispielsweise in einem geschützten Speicherbereich des Speichers des Nutzer-Computersystems gespeichert.

Nach Ausführungsformen umfasst das Nutzer-Zertifikat zumindest einen Teil der bereitzustellenden Personalisierungsdaten als Klartext. Ausführungsformen können den Vorteil haben, dass die in Klartext von dem Nutzer-Zertifikat umfassten Daten nicht zusätzlich an den Dienst-Server gesendet werden müssen. Das Nutzer-Zertifikat wird dem Dienst-Server beispielsweise bei der gegenseitigen Authentifizierung im Zuge des Aufbaus des zweiten verschlüsselten Kanals zugesendet. Damit werden auch die entsprechenden Personalisierungsdaten in Klartext übertragen.

Ein X.509 Zertifikat umfasst beispielsweise einen Namen des Nutzers ("distinguished name"), auf den sich das Zertifikat bezieht. Mit anderen Worten beglaubigt das entsprechende X.509 Zertifikat den öffentlichen Schlüssel des Subjekts bzw. Nutzer, welcher den entsprechenden privaten Schlüssel besitzt. Der Namen des Nutzers kann eine Mehrzahl von Attributen des Zertifikatinhabers, d.h. des Nutzers, in Klartext umfassen. Beispielsweise Angaben zu Folgendem umfassen: gebräuchlicher Name (CN), Organisation (O), Organisationseinheit (OU), Land/Region (C), Bundesstaat (ST), Ort (L). Ferner kann ein X.509 Zertifikat beispielsweise eine E-Mail-Adresse als einen alternativen Namen umfassen.

Nach Ausführungsformen umfasst das Nutzer-Zertifikat sämtliche bereitzustellenden Personalisierungsdaten als Klartext. Die erste Aufforderung wird vor dem Aufbau des zweiten verschlüsselten Kommunikationskanal empfangen und die Personalisierungsdaten werden in Form des Nutzer-Zertifikats im Zuge der gegenseitigen Authentifizierung zum Aufbau des zweiten verschlüsselten Kommunikationskanal von dem Nutzer-Computersystem an den Dienst-Server weitergeleitet. Ausführungsformen können den Vorteil haben, dass die bereitzustellenden Personalisierungsdaten direkt im Zuge der gegenseitigen Authentifizierung zum Aufbau des zweiten verschlüsselten Kommunikationskanal von dem Nutzer-Computersystem an den Dienst-Server weitergeleitet werden und kein zusätzliches Senden von Personalisierungsdaten notwendig ist. Bei dem Nutzer-Zertifikat kann es sich beispielsweise um ein X.509-Zertifikat der Version drei oder höher handeln, in welchem zumindest ein Teil der bereitzustellenden Personalisierungsdaten oder alle bereitzustellenden Personalisierungsdaten als Erweiterungen umfasst sind.

Falls die Personalisierungsdaten bereits im Zuge der gegenseitigen Authentifizierung zum Aufbau des zweiten verschlüsselten Kommunikationskanal von dem Nutzer-Computersystem an den Dienst-Server weitergeleitet werden, wird anschließend über den zweiten verschlüsselten Kommunikationskanal beispielsweise nur der Berechtigungsnachweis des Nutzers zur Nutzung der Personalisierungsdaten in Form einer durch das Nutzer-Computersystem unter Verwendung eines dem öffentlichen kryptographischen Schlüssel des Nutzers zugehörigen privaten kryptographischen Schlüssels erstellte Signatur der Personalisierungsdaten.

Nach Ausführungsformen wird der erste verschlüsselte Kommunikationskanal zwischen der Browseranwendung des Nutzer-Computersystems und dem Dienst-Server als Endpunkte aufgebaut. Beispielsweise ist der erste Kommunikationskanal mittels einer Ende-zu-Ende-Verschlüsselung zwischen der Browseranwendung des Nutzer-Computersystems und dem Dienst-Server abgesichert. Nach Ausführungsformen wird der zweite verschlüsselte Kommunikationskanal zwischen der Browseranwendung des Nutzer-Computersystems und dem Dienst-Server als Endpunkte aufgebaut. Beispielsweise ist der zweite Kommunikationskanal mittels einer Ende-zu-Ende-Verschlüsselung zwischen der Browseranwendung des Nutzer-Computersystems und dem Dienst-Server abgesichert.

Nach Ausführungsformen wird die erste Aufforderung über den zweiten verschlüsselten Kommunikationskanal empfangen und zumindest ein Teil der Personalisierungsdaten wird zusätzlich zu dem im Zuge der gegenseitigen Authentifizierung zum Aufbau des zweiten verschlüsselten Kommunikationskanal von dem Nutzer-Computersystem an den Dienst-Server gesendeten Nutzer-Zertifikat über den zweiten verschlüsselten Kommunikationskanal weitergeleitet.

Ausführungsformen können den Vorteil haben, dass Personalisierungsdaten, welche nicht im Klartext vom Nutzer-Zertifikat umfasst sind, über den zweiten verschlüsselten Kommunikationskanal nach erfolgreicher gegenseitiger Authentifizierung von dem Nutzer-Computersystem an den Dienst-Server gesendeten werden. Somit kann vermieden werden, dass Personalisierungsdaten vor der erfolgreichen gegenseitigen Authentifizierung im Klartext übertragen werden oder aber es kann zumindest vermieden werden, dass alle Personalisierungsdaten vor der erfolgreichen gegenseitigen Authentifizierung im Klartext übertragen werden. Ausführungsformen können den Vorteil haben, dass solche über den zweiten verschlüsselten Kommunikationskanal weitergeleitete Personalisierungsdaten durch die Verschlüsselung des zweiten Kommunikationskanals mittels der ephemeren Schlüssel zur Verschlüsselung des zweiten Kommunikationskanals abgesichert sind.

Nach Ausführungsformen werden sämtliche Personalisierungsdaten zusätzlich zu dem im Zuge der gegenseitigen Authentifizierung zum Aufbau des zweiten verschlüsselten Kommunikationskanal von dem Nutzer-Computersystem an den Dienst-Server gesendeten Nutzer-Zertifikat über den zweiten verschlüsselten Kommunikationskanal weitergeleitet. Ausführungsformen können den Vorteil haben, dass solche über den zweiten verschlüsselten Kommunikationskanal weitergeleitete Personalisierungsdaten durch die Verschlüsselung des zweiten Kommunikationskanals mittels der ephemeren Schlüssel zur Verschlüsselung des zweiten Kommunikationskanals abgesichert sind.

Nach Ausführungsformen wird zumindest auf einen Teil der bereitzustellenden Personalisierungsdaten eine Einwegfunktion angewendet, d.h. jeweils individuell auf die Personalisierungsdaten oder auf eine Kombination aus den Personalisierungsdaten, deren Ergebnis bzw. Ergebnisse das Nutzer-Zertifikat umfasst. Nach Ausführungsformen handelt es sich bei der Einwegfunktion um eine Hash-Funktion. Nach Ausführungsformen umfasst das Nutzer-Zertifikat zumindest einen Teil der bereitzustellenden Personalisierungsdaten jeweils als Hashwert. Nach Ausführungsformen umfasst das Nutzer-Zertifikat einen Hashwert einer Kombination aus zumindest einem Teil der bereitzustellenden Personalisierungsdaten. Nach Ausführungsformen wird auf sämtliche bereitzustellenden Personalisierungsdaten eine Einwegfunktion angewendet, d.h. jeweils individuell auf die Personalisierungsdaten oder auf eine Kombination aus den Personalisierungsdaten, deren Ergebnis bzw. Ergebnisse das Nutzer-Zertifikat umfasst. Nach Ausführungsformen umfasst das Nutzer-Zertifikat sämtliche bereitzustellenden Personalisierungsdaten jeweils als Hashwert. Nach Ausführungsformen umfasst das Nutzer-Zertifikat einen Hashwert einer Kombination aus sämtlichen bereitzustellenden Personalisierungsdaten. Ausführungsformen können den Vorteil haben, dass solche als Hashwerte mit dem Nutzer-Zertifikat übertragenen Personalisierungsdaten keiner weiteren Absicherung, wie etwa einer Verschlüsselung bedürfen, da sie aus den Hashwerten nicht rekonstruierbar sind. Dennoch wird durch das Nutzer-Zertifikat eine kryptographische Bindung zwischen den entsprechenden Personalisierungsdaten und dem asymmetrischen kryptographischen Schlüsselpaar hergestellt, dessen öffentlichen kryptographischen Schlüssel das Nutzer-Zertifikat umfasst. Werden die Personalisierungsdaten zusätzlich über den zweiten verschlüsselten Kommunikationskanal an den Dienst-Server weitergeleitete, kann der Dienst-Server die empfangenen Personalisierungsdaten unter Verwendung eines entsprechenden ephemeren kryptographischen Schlüssels zur Verschlüsselung des zweiten Kommunikationskanal, wie etwa einen symmetrischen ephemeren kryptographischen Schlüssel, entschlüsseln und ein oder mehrere Hashwerte aus diesen berechnen. Die berechneten Hashwertekönnen mit den Hashwerten des Nutzer-Zertifikats verglichen werden. Bei einer Übereinstimmung sind die empfangenen Personalisierungsdaten authentisch. Ferner kann die Signatur der Personalisierungsdaten mit dem von dem Nutzer-Zertifikat als Signaturprüfschlüssel umfassten öffentlichen kryptographischen Schlüssel entschlüsselt und der resultierende Hashwert mit dem Hashwert der gemäß Nutzer-Zertifikat und/oder dem Hashwert der empfangenen Personalisierungsdaten verglichen werden. Falls diese übereinstimmen war der Nutzer, welcher die Signatur erstellt hat zur Nutzung der entsprechenden Personalisierungsdaten berechtigt und hat deren Nutzung durch seine weitergeleitetet Signatur zudem zugestimmt.

Nach Ausführungsformen handelt es sich bei dem Nutzer-Zertifikat um ein X.509-Zertifikat der Version drei oder höher, welches den Hashwert oder die Hashwerte der bereitzustellenden Personalisierungsdaten als Erweiterungen umfasst.

Nach Ausführungsformen handelt es sich bei der Personalisierungsdatenquelle um ein Sicherheitselement des Nutzer-Computersystems. Das Sicherheitselement umfasst einen geschützten Speicherbereich, in welchem die Personalisierungsdaten gespeichert sind.

Unter einem Sicherheitselement wird ein geschütztes Element, d.h. Hardware-, Firmware- oder Softwareelement, verstanden, welches kryptographische Mittel bereitstellt. Diese kryptographische Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher vertrauliche und/oder kryptografische Daten und/oder Programminstruktionen gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein Key-Store kann auch als Teil des Hauptprozessors implementiert sein, beispielsweise in einer TEE (Trusted Excecution Environment).

Nach Ausführungsformen handelt es sich bei der Personalisierungsdatenquelle um einen ID-Token. Der ID-Token umfasst einen elektronischen Speicher mit einem geschützten Speicherbereich, in welchem die Personalisierungsdaten gespeichert sind. Ferner umfasst der ID-Token eine Kommunikationsschnittstelle zur Kommunikation mit dem Nutzer-Computersystem.

Unter einem "ID-Token" wird hier eine Vorrichtung verstanden, wie beispielsweise ein tragbares elektronisches Gerät, zum Beispiel in Form eines sogenannten USB-Sticks, einer Chipkarte, insbesondere mit RFID-, USB- und/oder NFC-Schnittstelle, oder eines Dokuments.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln. Das Dokument weist beispielsweise RFID-, USB- und/oder NFC-Schnittstellen auf.

Nach Ausführungsformen weist der ID-Token keine eigene Energieversorgung auf. Als Energiequelle kann vielmehr eine Vorrichtung zum "Ernten" ("energy harvesting") von Energie dienen, welche von dem Nutzer-Computersystem an den ID Token übertragen wird, wie beispielsweise eine RFID-Antenne. Nach Ausführungsformen weist der ID-Token eine eigene Energieversorgung, wie etwa einen Akkumulator und/oder eine Batterie auf.

Nach Ausführungsformen umfasst das Nutzer-Computersystem eine Kommunikationsschnittstelle zur Kommunikation mit dem ID-Token, beispielsweise eine RFID-, USB- und/oder NFC-Schnittstellen. Die Kommunikation zwischen Nutzer-Computersystem und ID-Token kann kontaktlos oder kontaktbasiert erfolgen.

Nach Ausführungsformen werden die Personalisierungsdaten aus der Personalisierungsdatenquelle unter Verwendung eines ID-Provider-Servers ausgelesen. Das Auslesen umfasst ferner:
- Authentifizieren des ID-Provider-Servers durch die Personalisierungsdatenquelle unter Verwendung eines ID-Provider-Server-Zertifikats des ID-Provider-Servers im Zuge eines Aufbaus eines dritten verschlüsselten Kommunikationskanals zwischen der Personalisierungsdatenquelle und dem ID-Provider-Servers über das Nutzer-Computersystem und das Netzwerk, wobei das ID-Provider-Server-Zertifikat eine Leseberechtigung für einen Lesezugriff des ID-Provider-Servers auf die in dem geschützten Speicherbereich der Personalisierungsdatenquelle gespeicherten Personalisierungsdaten umfasst, wobei das Authentifizieren ein Prüfen der Leseberechtigung des ID-Provider-Servers durch die Personalisierungsdatenquelle umfasst,
- Durchführen des Lesezugriffs des ID-Provider-Servers auf die in der Personalisierungsquelle gespeicherten bereitzustellenden Personalisierungsdaten über das Netzwerk und das Nutzer-Computersystem,
- Senden der ausgelesenen Personalisierungsdaten von dem ID-Provider-Server an den Dienst-Server über das Netzwerk und das Nutzer-Computersystem, wobei der ID-Provider-Server den Berechtigungsnachweis für den Nutzers zur Nutzung der Personalisierungsdaten in Form einer unter Verwendung eines Signaturschlüssels des ID-Provider-Servers erstellten Signatur der ausgelesenen Personalisierungsdaten sendet, wobei die Signatur des ID-Provider-Servers eine Bestätigung dafür ist, dass es sich bei den Personalisierungsdaten um Personalisierungsdaten handelt, welche aus einer sich in der Verfügungshoheit des Nutzers befinden Personalisierungsquelle ausgelesen wurden.

Ausführungsformen können den Vorteil haben, dass eine unabhängige, vertrauenswürdige Instanz in Form des ID-Provider-Servers die Personalisierungsdaten aus dem geschützten Speicherbereich der Personalisierungsquelle, wie etwa einem ID-Token oder einem Sicherheitselement, ausliest. Dadurch kann einerseits die Sicherheit der Personalisierungsdaten in der Personalisierungsquelle erhöht werden, da ein Auslesen nur für Instanzen möglich ist, welche über ein entsprechendes Zertifikat bzw. ein Berechtigungszertifikat mit einer Leseberechtigung für einen Lesezugriff des ID-Provider-Servers auf die in dem geschützten Speicherbereich der Personalisierungsdatenquelle gespeicherten Personalisierungsdaten verfügen. Ferner stellt der ID-Provider-Servers in diesem Fall einen Berechtigungsnachweis für den Nutzer zur Nutzung der Personalisierungsdaten bereit in Form einer unter Verwendung eines Signaturschlüssels, d.h. eines privaten kryptographischen Schlüssels, des ID-Provider-Servers erstellten Signatur der ausgelesenen Personalisierungsdaten. Der Dienst-Server kann die Validität dieser Signatur mit einem entsprechenden Signaturprüfschlüssel, d.h. einem zugehörigen öffentlichen kryptographischen Schlüssel, prüfen, dessen Authentizität beispielsweise durch ein Zertifikat des ID-Provider-Servers belegt wird. Der ID-Provider-Servers bestätigt als vertrauenswürdige Instanz das Auslesen der bereitgestellten Personalisierungsdaten aus der Personalisierungsquelle. Dass die ausgelesenen Personalisierungsdaten unverfälscht sind, ergibt sich aus deren Signatur und die Verfügungshoheit des Nutzers über die Personalisierungsquelle, welche der Nutzer zum Auslesen bereitstellt und gegenüber der er sich authentifiziert, belegt die Berechtigung des Nutzers zum Nutzen der entsprechenden Personalisierungsdaten.

Beispielsweise erfolgt eine gegenseitige Authentifizierung zwischen Personalisierungsdatenquelle und ID-Provider-Server unter Verwendung eines Zertifikats der Personalisierungsdatenquelle und des ID-Provider-Server-Zertifikat. Ausführungsformen können den Vorteil haben, dass der ID-Provider-Server somit sicherstellen kann, dass er die richtige Personalisierungsdatenquelle, beispielsweise das richtige Sicherheitselement oder das richtige ID-Token, ausliest.

Unter einem "ID-Provider-Server" wird hier ein Server verstanden, welcher dazu ausgebildet ist, über ein Netzwerk, wie zum Beispiel das Internet, einen Lesezugriff auf eine vordefinierte von bzw. über das Nutzer-Computersystem bereitgestellte Personalisierungsquelle durchzuführen und die Authentizität der ausgelesenen Personalisierungsdaten zu bestätigen.

Eine Kommunikation zwischen der Personalisierungsquelle und dem ID-Provider-Server erfolgt beispielsweise unter Verwendung des HTTPS-Protokolls. Nach Ausführungsformen ist die Kommunikation zwischen dem ID-Provider-Server und dem Dienst-Server beispielsweise ende-zu-ende-verschlüsselt.

Nach Ausführungsformen erfolgt das Bereitstellen der Personalisierungsdaten, d.h. das Identifizieren des Nutzers durch den Dienst-Server zum Zweck der Registrierung, an diesem Web-Dienst online, beispielsweise unter Verwendung der Ausweisfunktion des deutschen Personalausweises, unter Verwendung des Nutzer-Computersystem. Bei dem Nutzer-Computersystem handelt es sich beispielsweise um ein mobiles tragbares Endgerät, einen Desktop-Computer oder ein Selbstbedienungsterminal, etwa in einer Meldebehörde. Nach Ausführungsformen initialisiert der Dienst-Server bzw. Web-Dienst Service innerhalb der Registrierungs-Sitzung den Authentisierungstoken zum Verwenden für ein zukünftiges Authentisieren gegenüber dem Dienst-Server bzw. Web-Dienst. Das Initialisieren umfasst ein Erzeugen des serverindividuellen Schlüsselpaars mit dem Authentisierungsschlüssel und dem Authentifizierungsschlüssel.

Nach Ausführungsformen wird eine ID-Anwendung auf dem Nutzer-Computersystem verwendet, welche den zweiten Kommunikationskanal aufbaut, die erste Aufforderung empfängt, das Auslesen der bereitzustellenden Personalisierungsdaten initiiert und die ausgelesenen Personalisierungsdaten sowie den Berechtigungsnachweis des Nutzers zur Nutzung der ausgelesenen Personalisierungsdaten weiterleitet.

Eine Kommunikation zwischen ID-Anwendung und dem ID-Provider-Server erfolgt beispielsweise unter Verwendung des HTTPS-Protokolls. Nach Ausführungsformen wird der zweite verschlüsselte Kommunikationskanal zwischen der ID-Anwendung des Nutzer-Computersystems und dem Dienst-Server als Endpunkte aufgebaut. Nach Ausführungsformen ist die Kommunikation zwischen der ID-Anwendung und dem Dienst-Server beispielsweise ende-zu-ende-verschlüsselt.

Nach Ausführungsformen umfasst die Registrierungswebseite einen Link des Dienst-Server, unter welchem ein Auslesen von Personalisierungsdaten zur Personalisierung des Nutzerkontos aus einer elektronischen Personalisierungsdatenquelle durch den Dienst-Server initialisiert wird. Nach Ausführungsformen wird der Link durch die Browseranwendung über den ersten verschlüsselten Kommunikationskanal aufgerufen. Nach Ausführungsformen wird der Link durch die ID-Anwendung über den ersten verschlüsselten Kommunikationskanal aufgerufen.

Nach Ausführungsformen empfängt das Nutzer-Computersystem zusammen mit der ersten Challenge ferner eine von dem Authentisierungstoken erzeugte Schlüssel-ID für das serverindividuelle kryptographische Schlüsselpaar aus Authentisierungsschlüssel und Authentifizierungsschlüssel und leitet den Schlüssel-ID zusammen mit der ersten Challenge an den Dienst-Server weiter.

Ausführungsformen können den Vorteil haben, dass der Authentisierungstoken bei zukünftigen Authentifizierungen des Nutzers des personalisierten Nutzerkontos die Schlüssel-ID mitsenden kann, sodass der Dienst-Server anhand der Schlüssel-ID bestimmen kann, welcher Authentifizierungsschlüssel für die Authentifizierung durch den Dienst-Server zu verwenden ist und/oder welches personalisierte Nutzerkonto dem sich authentisierenden Nutzer zugeordnet ist.

Nach Ausführungsformen erzeugt den Authentisierungstoken das serverindividuelle kryptographische Schlüsselpaar aus Authentisierungsschlüssel und Authentifizierungsschlüssel sowie die Schlüssel-ID und speichert diese in einem Speicher des Authentisierungstokens. Ausführungsformen können den Vorteil haben, dass diese Daten, wie etwa der Authentisierungsschlüssel und die Schlüssel-ID, dem Authentisierungstoken zur Verwendung bei zukünftige Authentisierungen des Nutzers zur Verfügung stehen. Nach Ausführungsformen erzeugt der Authentisierungstoken die erste Response auf die von der Browseranwendung empfangene erste Challenge, wobei der Authentisierungstoken die erste Challenge signiert.

Nach Ausführungsformen sendet das Nutzer-Computersystem das eindeutige Dienst-Server-Attribut an den Authentisierungstoken. Nach Ausführungsformen speichert der Authentisierungstoken das eindeutige Dienst-Server-Attribut. Nach Ausführungsformen handelt es sich bei dem eindeutigen Attribut um einen Identifikator des Dienst-Server, beispielsweise eine Adresse des Dienst-Servers, beispielsweise einen Domain-Name oder Sub-Domain-Namen.

Nach Ausführungsformen handelt es sich bei dem Authentisierungstoken um eine externe Komponente oder eine interne Komponente des Nutzer-Computersystems. Der Authentisierungstoken umfasst einen geschützten Speicherbereich, in welchem der serverindividuelle Authentisierungsschlüssel gespeichert ist. Nach Ausführungsformen umfasst der externe Authentisierungstoken eine Kommunikationsschnittstelle, über welche er mit dem Nutzer-Computersystem, beispielsweise unter Verwendung von Bluetooth, RFID, NFC oder USB, kommunizieren kann. Alternative kann es sich bei dem Authentisierungstoken um einen internen Token handeln, welcher im Nutzer-Computersystem selbst vorhanden ist. Nach Ausführungsformen erfolgt die Kommunikation kontaktlos oder kontaktbasiert.

Im Falle einer externen Komponente ist das Authentisierungstoken beispielsweise konfiguriert als ein tragbares elektronisches Gerät, zum Beispiel als ein sogenannter USB-Stick, eine Chipkarte, insbesondere mit Bluetooth, RFID-, USB- und/oder NFC-Schnittstelle, oder als ein Dokument.

Unter einem "Dokument" wird insbesondere ein Ausweis-, Wert- oder Sicherheitsdokument, insbesondere ein hoheitliches Dokument, insbesondere ein papierbasiertes und/oder kunststoffbasiertes Dokument, wie zum Beispiel ein elektronisches Ausweisdokument, insbesondere Reisepass, Personalausweis, Visum, Führerschein, Fahrzeugschein, Fahrzeugbrief, Gesundheitskarte, oder einen Firmenausweis, oder eine anderes ID-Dokument, eine Chipkarte, Zahlungsmittel, insbesondere Banknote, Bankkarte oder Kreditkarte, Frachtbrief oder ein sonstiger Berechtigungsnachweis verstanden. Insbesondere kann es sich bei dem ID-Token um ein Machine-Readable Travel Document, wie beispielsweise von der Internationalen Luftfahrtbehörde (ICAO) und/oder dem BSI standardisiert, handeln. Das Dokument weist beispielsweise Bluetooth, RFID-, USB- und/oder NFC-Schnittstellen auf.

Nach Ausführungsformen weist der Authentisierungstoken keine eigene Energieversorgung auf. Als Energiequelle kann vielmehr eine Vorrichtung zum "Ernten" ("energy harvesting") von Energie dienen, welche von dem Nutzer-Computersystem an den Authentisierungstoken übertragen wird, wie beispielsweise eine RFID-Antenne. Nach Ausführungsformen weist der Authentisierungstoken eine eigene Energieversorgung, wie etwa einen Akkumulator und/oder eine Batterie auf.

Im Falle einer internen Komponente ist das Authentisierungstoken beispielsweise konfiguriert als ein Sicherheitselement, d.h. ein geschütztes Element, etwa ein Hardware-, Firmware- oder Softwareelement, welches kryptographische Mittel bereitstellt. Diese kryptographische Mittel sind gegen Manipulation geschützt und beispielsweise über kryptographische Schlüssel nur für autorisierte Dienste und Anwendungen zugänglich. Insbesondere können die kryptographischen Mittel beispielsweise nur durch autorisierte Dienste und Anwendungen in das Sicherheitselement eingebracht, ergänzt, verändert und/oder gelöscht werden. Ein Sicherheitselement bietet mithin eine manipulationssichere Plattform, beispielsweise implementiert in Form eines sicheren Ein-Chip-Mikrocontroller, auf welcher vertrauliche und/oder kryptografische Daten und/oder Programminstruktionen gemäß vordefinierten Regeln und Sicherheitsanforderungen von zuverlässig identifizierten vertrauenswürdigen Instanzen gespeichert und so berechtigten Anwendungsprogrammen und/oder Betriebssystemen zur Verfügung gestellt werden können. Ein Sicherheitselement kann eingebettete oder integriert sein, beispielsweise zerstörungsfrei lösbar oder fest verbunden, d.h. nicht zerstörungsfrei lösbar, eingebracht sein. Das Sicherheitselement kann beispielweise eine SIM, UICC, SmartMicroSD, Smartcard, eSE, eSIM oder eUICC umfassen. Beispielsweise sind auf einem Sicherheitselement kryptographische Schlüssel gespeichert, d.h. das Sicherheitselement umfasst einen Datentresor für kryptographische Schlüssel bzw. einen "Key Store". Ein Key-Store kann auch als Teil des Hauptprozessors implementiert sein, beispielsweise in einer TEE (Trusted Excecution Environment).

Nach Ausführungsformen umfasst das Verfahren zum Authentisieren des Nutzers unter Verwendung des Authentisierungsschlüssels gegenüber dem Dienst-Server ferner:
- Empfangen der zweiten Challenge von dem Dienst-Server durch das Nutzer-Computersystem,
- Weiterleiten der zweiten Challenge von dem Nutzer-Computersystem an den Authentisierungstoken,
- Empfangen einer von dem Authentisierungstoken erstellten zweiten Response auf die zweite Challenge durch das Nutzer-Computersystem, wobei die zweite Response eine Signatur der zweiten Challenge mit dem serverindividuellen Authentisierungsschlüssel des Authentisierungstokens umfasst, wobei ein Erstellen der zweiten Response ein erfolgreiches Authentifizieren des Nutzers gegenüber dem Authentisierungstoken voraussetzt,
- Weiterleiten der zweiten Response durch das Nutzer-Computersystem an den Dienst-Server, welcher über den zugehörigen serverindividuellen Authentifizierungsschlüssel zum Validieren der von dem Nutzer als Authentisierungsnachweis bereitgestellten zweiten Response verfügt und die zweiten Response, im Falle einer erfolgreichen Validierung, dem personalisierten Nutzerkonto des Nutzers zuordnet.

Ausführungsformen können den Vorteil haben, dass eine sichere Authentisierung bzw. Authentifizierung des Nutzers mittels eines Challenge-Response-Verfahrens ermöglicht wird.

Nach Ausführungsformen sendet das Nutzer-Computersystem zusammen mit der zweiten Challenge das eindeutige Dienst-Server-Attribut an den Authentisierungstoken. Nach Ausführungsformen empfängt das Nutzer-Computersystem zusammen mit der zweiten Response die Schlüssel-ID des serverindividuellen kryptographischen Schlüsselpaars und leitete diese zusammen mit der zweiten Response an den Dienst-Server weiter.

Ausführungsformen können den Vorteil haben, dass der Authentisierungstoken anhand des eindeutigen Dienst-Server-Attributs bestimmen kann, welcher serverindividuelle Authentisierungsschlüssel zum Authentisieren des Nutzers gegenüber dem entsprechenden Dienst-Server zu verwenden ist. Ausführungsformen können den Vorteil haben, dass der Dienst-Server anhand der Schlüssel-ID bestimmen kann, welcher Authentifizierungsschlüssel für die Authentifizierung des Nutzers durch den Dienst-Server zu verwenden ist und/oder welches personalisierte Nutzerkonto dem sich authentisierenden Nutzer zugeordnet ist.

Ausführungsformen umfassen ein Nutzer-Computersystem mit einem Prozessor, einem Speicher mit Programminstruktionen und einer Kommunikationsschnittstelle. Ein Ausführen der Programminstruktionen durch den Prozessor veranlasst das Nutzer-Computersystem dazu ein Verfahren zum Implementieren eines Authentifizierungsmechanismus auszuführen. Der Authentifizierungsmechanismus stellte eine personalisierte, serverindividuelle Authentisierung eines Nutzers gegenüber einem Dienst-Server unter Verwendung eines Authentisierungstokens bereit.

Das Verfahren zum Implementieren des Authentifizierungsmechanismus umfasst:
- Aufrufen einer von dem Dienst-Server bereitgestellten Registrierungswebseite zum Registrieren des Nutzers bei dem Dienst-Server durch das Nutzer-Computersystem über ein Netzwerk unter Verwendung einer Browseranwendung, wobei im Zuge des Aufrufens der Registrierungswebseite ein erster verschlüsselter Kommunikationskanal zwischen dem Nutzer-Computersystem und dem Dienst-Server aufgebaut wird, wobei das Nutzer-Computersystem den Dienst-Server im Zuge des Aufbaus des ersten verschlüsselten Kommunikationskanals unter Verwendung eines Dienst-Server-Zertifikats authentifiziert, wobei das Registrieren des Nutzers ein Erstellen eines personalisierten Nutzerkontos für den Nutzer durch den Dienst-Server umfasst,
- Aufbau eines parallelen zweiten verschlüsselten Kommunikationskanal zwischen dem Nutzer-Computersystem und dem Dienst-Server, wobei im Zuge des Aufbaus des zweiten verschlüsselten Kommunikationskanals eine gegenseitige Authentifizierung von Nutzer und Dienst-Server unter Verwendung eines Nutzer-Zertifikats und des Dienst-Server-Zertifikats erfolgt,
- Empfangen einer ersten Aufforderung von dem Dienst-Server durch das Nutzer-Computersystem zum Bereitstellen von Personalisierungsdaten des Nutzers zur Personalisierung des Nutzerkontos,
- Initiieren eines Auslesens der bereitzustellenden Personalisierungsdaten durch das Nutzer-Computersystem aus einer elektronischen Personalisierungsdatenquelle, wobei ein Auslesen der bereitzustellenden Personalisierungsdaten ein erfolgreiches Authentisieren des Nutzers gegenüber der Personalisierungsdatenquelle voraussetzt,
- Weiterleiten der aus der Personalisierungsdatenquelle ausgelesenen Personalisierungsdaten durch das Nutzer-Computersystem an den Dienst-Server über den zweiten verschlüsselten Kommunikationskanal,
- Weiterleiten eines Berechtigungsnachweises des Nutzers zur Nutzung der Personalisierungsdaten als seine eigenen Personalisierungsdaten durch das Nutzer-Computersystem an den Dienst-Server über den zweiten verschlüsselten Kommunikationskanal,
- Empfangen einer zweiten Aufforderung von dem Dienst-Server durch das Nutzer-Computersystem unter Verwendung der Browseranwendung über den ersten verschlüsselten Kommunikationskanal zum Bereitstellen eines serverindividuellen Authentifizierungsschlüssels zum zukünftigen Authentifizieren des Nutzers des personalisierten Nutzerkontos, wobei die zweite Aufforderung eine ersten Challenge umfasst,
- Weiterleiten der ersten Challenge von dem Nutzer-Computersystem an einen Authentisierungstoken des Nutzers,
- Empfangen einer von dem Authentisierungstoken erstellten ersten Response auf die erste Challenge durch das Nutzer-Computersystem zusammen mit einem serverindividuellen Authentifizierungsschlüssel für den Dienst-Server in Form eines öffentlichen kryptographischen Schlüssel eines von dem Authentisierungstoken unter Verwendung eines eindeutigen Dienst-Server-Attributs erzeugten asymmetrischen kryptographischen Schlüsselpaars, wobei die erste Response eine Signatur der ersten Challenge mit einem dem Authentifizierungsschlüssel zugehörigen serverindividuellen Authentisierungsschlüssel in Form eines privaten kryptographischen Schlüssel des erzeugten asymmetrischen kryptographischen Schlüsselpaars umfasst, wobei ein Erstellen der ersten Response ein erfolgreiches Authentifizieren des Nutzers gegenüber dem Authentisierungstoken voraussetzt,
- Weiterleiten der ersten Response und des serverindividuellen Authentifizierungsschlüssels durch das Nutzer-Computersystem unter Verwendung der Browseranwendung über den ersten verschlüsselten Kommunikationskanal an den Dienst-Server zum Speichern des serverindividuellen Authentifizierungsschlüssels in Verbindung mit dem personalisierten Nutzerkonto des Nutzers, wobei die erste Response als Nachweis dient, dass der Nutzer über den zu dem Authentifizierungsschlüssel gehörigen Authentisierungsschlüssel verfügt, wobei der gespeicherte Authentifizierungsschlüssel den Dienst-Server dazu befähigt im Zuge von zukünftigen Authentifizierungen des Nutzers jeweils eine Validität einer von dem Nutzer als Authentisierungsnachweis bereitgestellten zweiten Response mit einer zweiten Signatur einer zweiten Challenge des Dienst-Servers zu prüfen, welche unter Verwendung des serverindividuellem Authentisierungsschlüssel erstellt wurde, und dem personalisierten Nutzerkonto des Nutzers zuzuordnen.

Nach Ausführungsformen ist das Nutzer-Computersystem dazu konfiguriert jede der zuvor beschrieben Ausführungsformen des Verfahrens zum Implementieren eines Authentifizierungsmechanismus auszuführen.

Nach Ausführungsformen umfasst das Nutzer-Computersystem die Personalisierungsdatenquelle. Bei der Personalisierungsdatenquelle handelt es sich beispielsweise um eine Personalisierungsdatenquelle, welche dazu konfiguriert ist die Verfahrensschritte der Personalisierungsdatenquelle nach einer der zuvor beschriebenen Ausführungsformen auszuführen.

Nach Ausführungsformen handelt es sich bei der Personalisierungsdatenquelle um den Speicher des Nutzer-Computersystems. Nach Ausführungsformen handelt es sich bei der Personalisierungsdatenquelle um ein Sicherheitselement des Nutzer-Computersystems.

Nach Ausführungsformen umfasst das Nutzer-Computersystem den Authentisierungstoken. Bei dem Authentisierungstoken handelt es sich beispielsweise um ein Authentisierungstoken, welcher dazu konfiguriert ist die Verfahrensschritte des Authentisierungstoken nach einer der zuvor beschriebenen Ausführungsformen auszuführen. Nach Ausführungsformen handelt es sich bei dem Authentisierungstoken um ein Sicherheitselement des Nutzer-Computersystems.

Ausführungsformen umfassen System mit einem Nutzer-Computersystem nach einer der zuvor beschriebenen Ausführungsformen sowie dem Authentisierungstoken.

Nach Ausführungsformen ist das System dazu konfiguriert jede der zuvor beschrieben Ausführungsformen des Verfahrens zum Implementieren eines Authentifizierungsmechanismus auszuführen.

Nach Ausführungsformen umfasst das System ferner die Personalisierungsdatenquelle. Bei der Personalisierungsdatenquelle handelt es sich beispielsweise um eine Personalisierungsdatenquelle, welche dazu konfiguriert ist die Verfahrensschritte der Personalisierungsdatenquelle nach einer der zuvor beschriebenen Ausführungsformen auszuführen.

Nach Ausführungsformen handelt es sich bei der Personalisierungsdatenquelle um den Speicher des Nutzer-Computersystems. Nach Ausführungsformen handelt es sich bei der Personalisierungsdatenquelle um ein Sicherheitselement des Nutzer-Computersystems. Nach Ausführungsformen handelt es sich bei der Personalisierungsdatenquelle um einen ID-Token.

Nach Ausführungsformen umfasst das System ferner den Dienst-Server. Bei dem Dienst-Server handelt es sich beispielsweise um einen Dienst-Server, welcher dazu konfiguriert ist die Verfahrensschritte des Dienst-Server nach einer der zuvor beschriebenen Ausführungsformen auszuführen.

Nach Ausführungsformen umfasst das System ferner einen ID-Provider-Server. Bei dem ID-Provider-Server handelt es sich beispielsweise um einen ID-Provider-Server, welcher dazu konfiguriert ist die Verfahrensschritte des ID-Provider-Server nach einer der zuvor beschriebenen Ausführungsformen auszuführen.

Im Weiteren werden Ausführungsformen der Erfindung mit Bezugnahme auf die Zeichnungen näher erläutert. Es zeigen:
- Figur 1: ein schematisches Blockdiagramm einer Ausführungsform eines exemplarischen Systems zum Implementieren eines Authentifizierungsmechanismus,
- Figur 2: ein schematisches Blockdiagramm einer Ausführungsform eines exemplarischen Systems zum Implementieren eines Authentifizierungsmechanismus,
- Figur 3: ein schematisches Blockdiagramm einer Ausführungsform eines exemplarischen Systems zum Implementieren eines Authentifizierungsmechanismus,
- Figur 4: ein schematisches Blockdiagramm einer Ausführungsform eines exemplarischen Systems zum Implementieren eines Authentifizierungsmechanismus,
- Figur 5: ein schematisches Flussdiagramm einer Ausführungsform eines exemplarischen Verfahrens zum Implementieren eines Authentifizierungsmechanismus,
- Figur 6: ein schematisches Flussdiagramm einer Ausführungsform eines exemplarischen Verfahrens zum Implementieren eines Authentifizierungsmechanismus,
- Figur 7: ein schematisches Flussdiagramm einer Ausführungsform eines exemplarischen Verfahrens zum Implementieren eines Authentifizierungsmechanismus,
- Figur 8: ein schematisches Flussdiagramm einer Ausführungsform eines exemplarischen Verfahrens zum Implementieren eines Authentifizierungsmechanismus,
- Figur 9: ein schematisches Flussdiagramm einer Ausführungsform eines exemplarischen Verfahrens zum Implementieren eines Authentifizierungsmechanismus, und
- Figur 10: ein schematisches Flussdiagramm einer Ausführungsform eines exemplarischen Verfahrens zum Authentisieren eines Nutzers.

Elemente der nachfolgenden Ausführungsformen, die einander entsprechen, werden mit denselben Bezugszeichen gekennzeichnet.

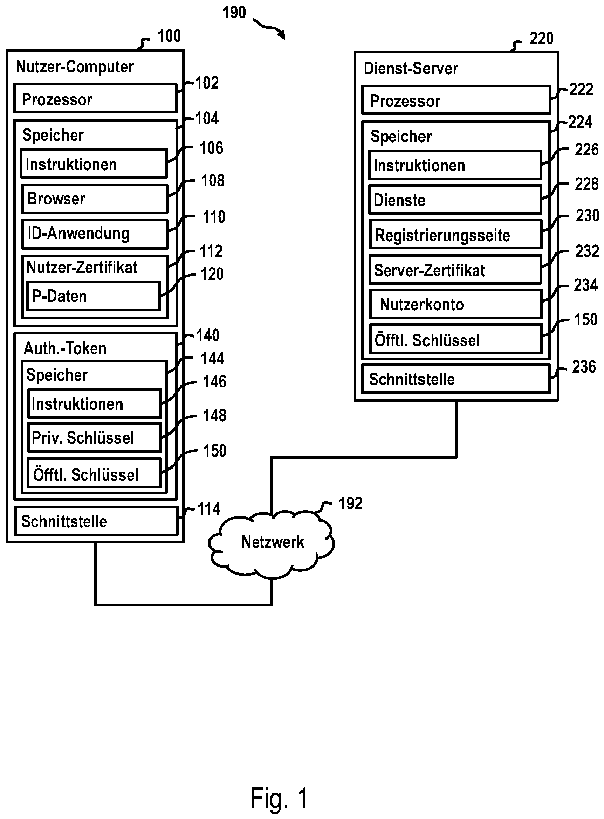

Figur 1 zeigt eine Ausführungsform eines exemplarischen Systems 190 mit einem Nutzer-Computersystem 100 und einem Dienst-Server 220 zum Implementieren eines Authentifizierungsmechanismus. Der Nutzer-Computersystem 100 umfasst einen Prozessor 102, einen Speicher 104 mit Programminstruktionen 106 und eine Kommunikationsschnittelle 114 zur Kommunikation über ein Netzwerk 192, wie etwa das Internet. Ein Ausführen der Programminstruktionen 106 durch den Prozessor 102 kann das Nutzer-Computersystem 100 dazu veranlassen unter Verwendung einer Browseranwendung 108 eine Webseite des Dienst-Server 220 aufzurufen, beispielsweise eine von dem Dienst-Server 220 bereitgestellte Registrierungswebseite 230.

Der Dienst-Server 220 umfasst beispielsweise einen Prozessor 222, einen Speicher 224 mit Programminstruktionen 226 und eine Kommunikationsschnittelle 236 zur Kommunikation über ein Netzwerk 192. Ein Ausführen der Programminstruktionen 226 durch den Prozessor 222 kann den Dienst-Server 220 dazu veranlassen Dienste über das Netzwerk 192 bereitzustellen, welche beispielsweise der Nutzer-Computersystem 100 bzw. welche ein Nutzer unter Verwendung des Nutzer-Computersystem 100 in Anspruch nehmen kann. Hierzu kann ein Implementieren eines Authentifizierungsmechanismus für den Nutzer gegenüber dem Dienst-Server 220 erforderlich sein. Der Dienst-Server 220 stellt zu diesem Zweck eine Registrierungswebseite 230 zum Aufruf durch das Nutzer-Computersystem 100 über das Netzwerk 192 bereit. Im Zuge eines Aufrufens der Registrierungswebseite 230 durch das Nutzer-Computersystem 100 wird ein verschlüsselter Kommunikationskanal zwischen dem Nutzer-Computersystem 100, beispielsweise der Browseranwendung 108, und dem Dienst-Server 220 über das Netzwerk 192 aufgebaut. Hierzu umfasst der Dienst-Server 220 beispielsweise Dienst-Server-Zertifikat 232 zum Authentisieren gegenüber dem Nutzer-Computersystem 100. Das Registrieren des Nutzers umfasst beispielsweise ein Erstellen eines personalisierten Nutzerkontos 234.

Für eine Personalisierung diese Nutzerkontos 234 benötigt der Dienst-Server 220 Personalisierungsdaten 120 der Nutzer, welche dieser beispielsweise unter Verwendung eines Nutzer-Zertifikats 112 dem Dienst-Server 220 über das Netzwerk 192 zur Verfügung stellt. Das Nutzer-Zertifikats 112 wird beispielsweise im Zuge einer gegenseitigen Authentifizierung von Nutzer-Computersystem 100 und Dienst-Server 220 zum Aufbau eines parallelen verschlüsselten Kommunikationskanals zwischen dem Nutzer-Computersystem 100, beispielsweise der Browseranwendung 108 oder einer ID-Anwendung 110, und dem Dienst-Server 220 über das Netzwerk 192 an den Dienst-Server 220 gesendet. Falls das Nutzer-Zertifikats 112 sämtliche bereitzustellenden Personalisierungsdaten 120 in Klartext umfasst, sendet Nutzer-Computersystem 100 beispielsweise lediglich einen Berechtigungsnachweis zur Nutzung der bereits gesendeten Personalisierungsdaten 120, etwa in Form einer Signatur der Personalisierungsdaten 120, über den verschlüsselten Kommunikationskanal an den Dienst-Server 220. Falls das Nutzer-Zertifikats 112 beispielsweise Hashwerte sämtlicher bereitzustellenden Personalisierungsdaten 120, aber keine oder nicht alle bereitzustellenden Personalisierungsdaten 120 in Klartext umfasst, werden zusätzlich zumindest die nicht umfassten Personalisierungsdaten 120 oder auch alle bereitzustellenden Personalisierungsdaten 120 über den verschlüsselten Kommunikationskanal an den Dienst-Server 220 gesendet. Zum Auslesen der Personalisierungsdaten 120 aus dem Speicher 104 kann eine erfolgreiche Authentifizierung des Nutzers durch das Nutzer-Computersystem 100 und/oder durch den Speicher 104 bzw. eine Kontrollelement des Speichers 104 notwendig sein. Hierzu kann das Nutzer-Computersystem 100 beispielsweise einen Authentifizierungssensor umfassen. Der Dienst-Server 220 prüft den Berechtigungsnachweis und verwendet die Personalisierungsdaten 120, im Falle einer erfolgreichen Prüfung, zur Personalisierung des Nutzerkontos 234.

Ferner kann der Dienst-Server 220 das Nutzer-Computersystem 100 zum Bereitstellen eines serverindividuellen Authentifizierungsschlüssels 150, in Form eines öffentlichen kryptographischen Schlüssels, zum zukünftigen Authentifizieren des Nutzers des Nutzerkontos 234 auffordern. Das Nutzer-Computersystem 100 verwendet zum Erstellen des Authentifizierungsschlüssels 150 und zum Speichern sowie Verwalten eines zugehörigen Authentisierungsschlüssels 148, in Form eines privaten kryptographischen Schlüssels, einen Authentisierungstoken 140. Diesen kann das Nutzer-Computersystem 100 beispielsweise als Sicherheitselement umfassen. Der Authentisierungstoken 140 umfasst beispielsweise einen Speicher mit Programminstruktionen 146, deren Ausführung den Authentisierungstoken 140 dazu veranlasst ein serverindividuelles asymmetrisches Schlüsselpaar mit dem Authentisierungsschlüssel 148 und dem Authentifizierungsschlüssel 150 zu erzeugen. Alternativ kann dem Authentisierungstoken 140 ein entsprechender Speicher zugeordnet sein, auf welchen das Authentisierungstoken 140 beispielsweise ein ausschließliches Zugriffsrecht besitzt. Nach Ausführungsformen umfasst das Sicherheitselement hierzu einen eigenen Prozessor. Ein Ausführen der Programminstruktionen 146 kann den Authentisierungstoken 140 ferner dazu veranlassen eine von dem Dienst-Server 220 im Zuge eines Challenge-Response-Protokoll empfangene Challenge mit dem erzeugten Authentisierungsschlüssel 148 zu signieren. Die signierte Challenge kann als Response zusammen mit dem Authentifizierungsschlüssel 150 von dem Nutzer-Computersystem 100 an den Dienst-Server 220 gesendet werden. Der Dienst-Server 220 prüft die Signatur und speichert den Authentifizierungsschlüssel 150 in Verbindung mit dem Nutzerkonto 234 zur zukünftigen Authentifizierung des Nutzers.

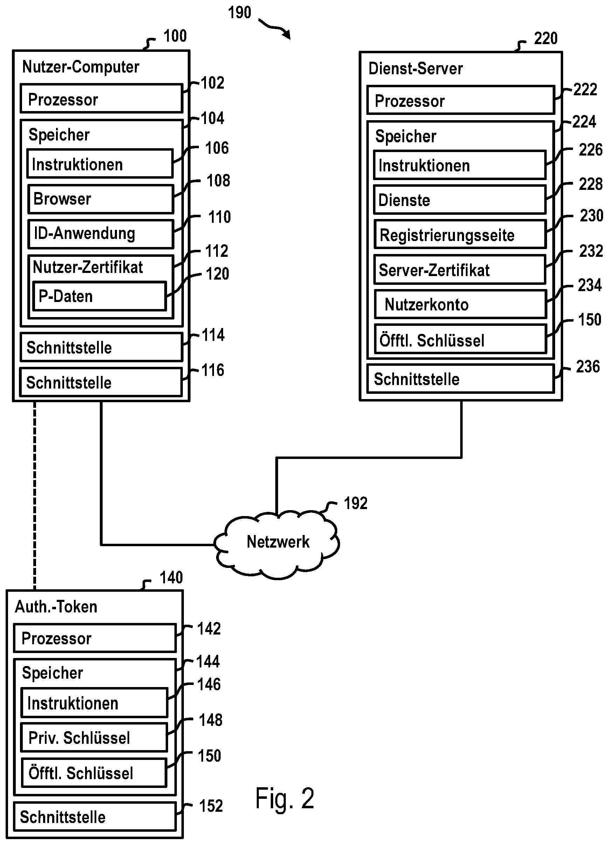

Figur 2 zeigt eine alternative Ausführungsform eines exemplarischen Systems 190 mit einem Nutzer-Computersystem 100 und einem Dienst-Server 220 zum Implementieren eines Authentifizierungsmechanismus, welche weitgehend mit der Ausführungsform aus Figur 1 übereinstimmt. In dieser Ausführungsform ist das Authentisierungstoken 140 als externe Komponente mit einem Prozessor 142 und einer Kommunikationsschnittstelle 152 zur Kommunikation mit einer Kommunikationsschnittstelle 116 des Nutzer-Computersystems 100 konfiguriert. Die Kommunikation über die Kommunikationsschnittstellen 116, 152 kann beispielsweise nach Bluetooth-, RFID- oder NFC-Standard erfolgen. Alternativ kann die Kommunikation beispielsweise nach USB-Standard erfolgen.

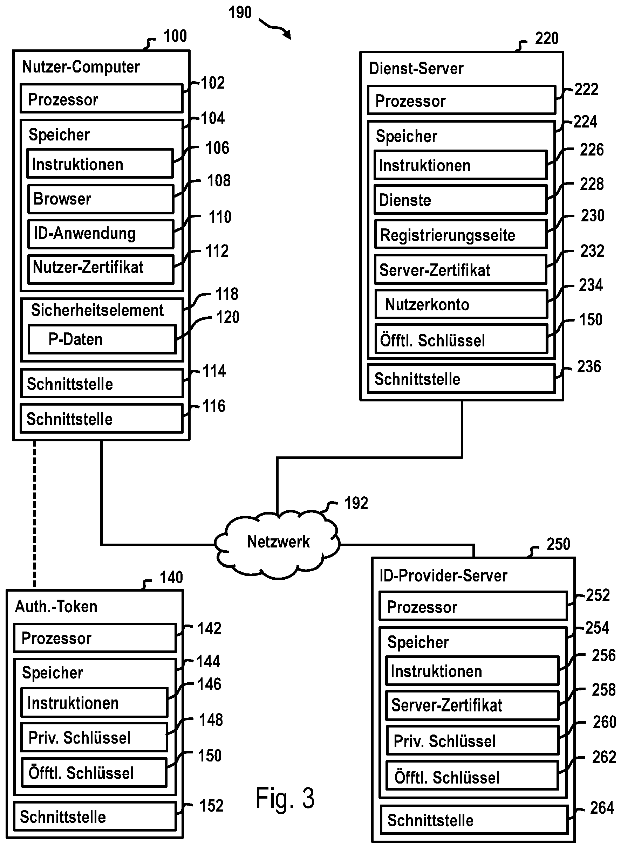

Figur 3 zeigt eine alternative Ausführungsform eines exemplarischen Systems 190 mit einem Nutzer-Computersystem 100, einem Dienst-Server 220 und einem ID-Provider-Server 250 zum Implementieren eines Authentifizierungsmechanismus, welche weitgehend mit der Ausführungsform aus Figur 2 übereinstimmt. In dieser Ausführungsform erfolgt das Auslesen der Personalisierungsdaten 120 durch den ID-Provider-Server250, welcher die ausgelesenen Personalisierungsdaten 120 dem Dienst-Server 220 über das Nutzer-Computersystem 100 zur Verfügung stellt.

Die Personalisierungsdaten 120 sind in einem Sicherheitselement 118 des Nutzer-Computersystem 100 gespeichert, auf welches der ID-Provider-Server 250 ein durch ein ID-Provider-Server-Zertifikat 258 belegtes Zugriffsrecht besitzt. Der ID-Provider-Server 250 umfasst einen Prozessor 252, einen Speicher 254 mit Programminstruktionen 256 und eine Kommunikationsschnittelle 264 zur Kommunikation über das Netzwerk 192. Ein Ausführen der Programminstruktionen 256 durch den Prozessor 252 kann den ID-Provider-Server 250 dazu veranlassen die Personalisierungsdaten 120 aus dem Sicherheitselement 118 des Nutzer-Computersystem 100 auszulesen und dem Dienst-Server 220 zur Personalisierung des Nutzerkontos 234 bereitzustellen. Beispielsweise leitet das Nutzer-Computersystem 100 dem ID-Provider-Server 250 die Aufforderung des Dienst-Servers 220 zum Bereitstellen der Personalisierungsdaten 120 weiter. Der ID-Provider-Server 250 baut einen verschlüsselten Kommunikationskanal zu dem Sicherheitselement 118 über das Netzwerk 192 auf. Der ID-Provider-Server 250 authentisiert sich dabei gegenüber dem Sicherheitselement 118 mit seinem ID-Provider-Server-Zertifikat 258, welches ein Zugriffsrecht des ID-Provider-Servers 250 auf die bereitzustellenden Personalisierungsdaten 120 nachweist. Beispielsweise erfolgt eine gegenseitige Authentifizierung zwischen Sicherheitselement 118 und ID-Provider-Servers 250. In diesem Fall besitzt das Sicherheitselement 118 ebenfalls ein Zertifikat. Auf eine erfolgreiche Prüfung der Zugriffsberechtigung unter Verwendung des ID-Provider-Server-Zertifikat 258 liest der ID-Provider-Servers 250 die bereitzustellenden Personalisierungsdaten 120 über das Netzwerk 192 aus, signiert sie mit einem Signaturschlüssel 260, d.h. einem privaten kryptographischen Schlüssel, und sendet die ausgelesenen Personalisierungsdaten 120 zusammen mit der erstellten Signatur über das Nutzer-Computersystem an den Dienst-Server 220. Die Signatur der ausgelesenen Personalisierungsdaten 120 kann beispielsweise mit einem zum Signaturschlüssel 260 gehörenden Signaturprüfschlüssel 262, d.h. einem öffentlichen kryptographischen Schlüssel, geprüft werden. Diesen Signaturprüfschlüssel 262 stellt der ID-Provider-Servers 250 dem Dienst-Server 220 beispielsweise als Bestandteil eines entsprechenden Zertifikats bereit, welches die Authentizität des Signaturprüfschlüssel 262 belegt.

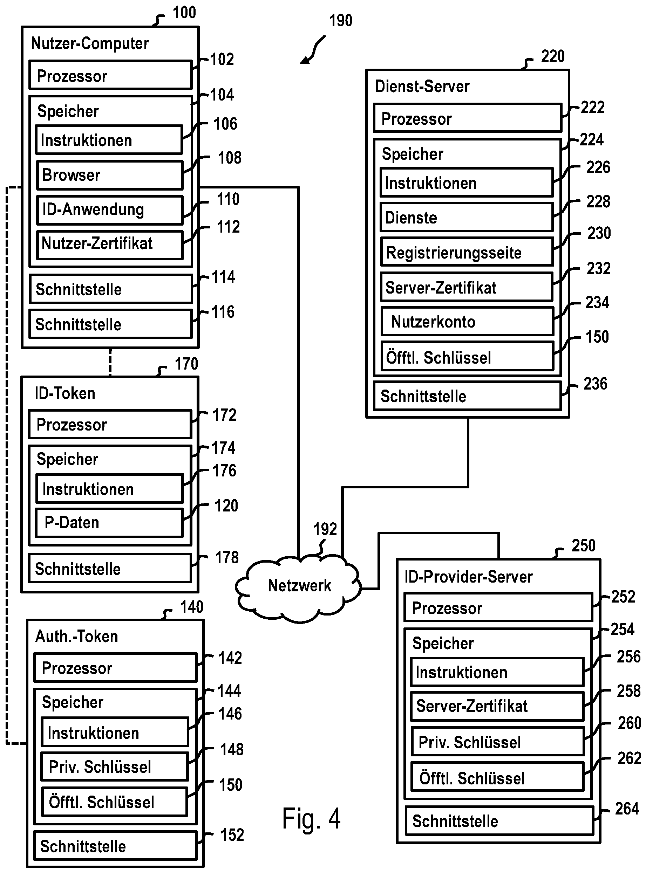

Figur 4 zeigt eine alternative Ausführungsform eines exemplarischen Systems 190 mit einem Nutzer-Computersystem 100 einem Dienst-Server 220, einem ID-Provider-Server 250 und einem ID-Token 170 zum Implementieren eines Authentifizierungsmechanismus, welche weitgehend mit der Ausführungsform aus Figur 3 übereinstimmt. In dieser Ausführungsform ist die Personalisierungsdatenquelle als eigenständiger ID-Token 170 konfiguriert, in dessen Speicher 174 die Personalisierungsdaten 120 gespeichert sind. Der ID-Token 170 umfasst einen Prozessor 172, den Speicher 174 mit Programminstruktionen 176 und eine Kommunikationsschnittelle 178. Die Kommunikationsschnittelle 178 ist konfiguriert zur Kommunikation mit der Kommunikationsschnittstelle 116 des Nutzer-Computersystems 100. Die Kommunikation über die Kommunikationsschnittstellen 116, 178 kann beispielsweise nach Bluetooth-, RFID- oder NFC-Standard erfolgen. Alternativ kann die Kommunikation beispielsweise nach USB-Standard erfolgen. Ein Ausführen der Programminstruktionen 176 durch den Prozessor 172 kann das ID-Token 170 dazu veranlassen dem ID-Provider-Server 250 auf einen erfolgreichen Nachweis einer Zugriffsberechtigung hin Lesezugriff auf die Personalisierungsdaten 120 zu gewähren.

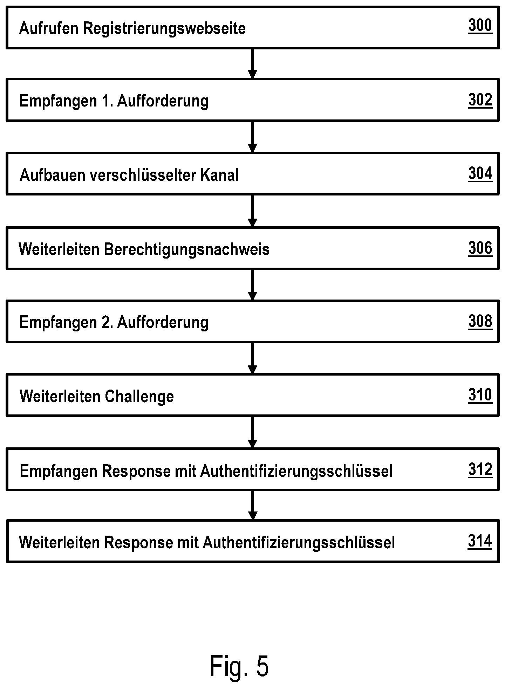

Figur 5 zeigt eine Ausführungsform eines exemplarischen Verfahrens zum Implementieren eines Authentifizierungsmechanismus. In Block 300 ruft das Nutzer-Computersystem eine von dem Dienst-Server bereitgestellte Registrierungswebseite zum Registrieren des Nutzers bei dem Dienst-Server über ein Netzwerk unter Verwendung einer Browseranwendung. Im Zuge des Aufrufens der Registrierungswebseite wird ein erster verschlüsselter Kommunikationskanal zwischen dem Nutzer-Computersystem und dem Dienst-Server aufgebaut wird, was beispielsweise ein Authentifizieren des Dienst-Servers unter Verwendung eines Dienst-Server-Zertifikats umfasst. Das Registrieren des Nutzers umfasst ein Erstellen eines personalisierten Nutzerkontos für den Nutzer durch den Dienst-Server. In Block 302 wird eine erste Aufforderung von dem Dienst-Server durch das Nutzer-Computersystem empfangen zum Bereitstellen von Personalisierungsdaten des Nutzers zur Personalisierung des Nutzerkontos. In Block 304 wird ein parallelen zweiter verschlüsselter Kommunikationskanal zwischen dem Nutzer-Computersystem, beispielsweise der Browseranwendung, und dem Dienst-Server aufgebaut. Im Zuge des Aufbaus des zweiten verschlüsselten Kommunikationskanals erfolgt beispielsweise eine gegenseitige Authentifizierung von Nutzer und Dienst-Server unter Verwendung eines Nutzer-Zertifikats und des Dienst-Server-Zertifikats. Beispielsweise umfasst das im Zuge der gegenseitigen Authentifizierung an den Dienst-Server gesendete Nutzer-Zertifikat die bereitzustellenden Personalisierungsdaten in Klartext. Das Nutzer-Zertifikat wird aus einem Speicher des Nutzer-Computersystems als Personalisierungsdatenquelle ausgelesen. Diese Auslesen setzt beispielsweise eine erfolgreiche Authentifizierung des Nutzers gegenüber dem Nutzer-Computersystem und damit dem Speicher des Nutzer-Computersystems voraus. In Block 306 wird ein Berechtigungsnachweis in Form einer Signatur der bereitzustellenden Personalisierungsdaten mit einem dem Nutzer-Zertifikat zugehörigen Signaturschlüssel des Nutzers, d.h. einem entsprechenden privaten kryptographischen Schlüssel, erstellt und an den Dienst-Server weitergeleitet. In Block 308 wird eine zweite Aufforderung von dem Dienst-Server durch das Nutzer-Computersystem unter Verwendung der Browseranwendung über den ersten verschlüsselten Kommunikationskanal empfangen. Die zweite Aufforderung fordert auf zum Bereitstellen eines serverindividuellen Authentifizierungsschlüssels zum zukünftigen Authentifizieren des Nutzers des personalisierten Nutzerkontos. Ferner umfasst die zweite Aufforderung beispielsweise eine Challenge. In Block 310 leitet das Nutzer-Computersystem die ersten Challenge an den Authentisierungstoken weiter, beispielsweise zusammen mit einem eindeutigen Dienst-Server-Attribut. In Block 312 empfängt das Nutzer-Computersystem von dem Authentisierungstoken eine Response auf die Challenge zusammen mit einem serverindividuellen Authentifizierungsschlüssel für den Dienst-Server in Form eines öffentlichen kryptographischen Schlüssels eines von dem Authentisierungstoken unter Verwendung des eindeutigen Dienst-Server-Attributs erzeugten asymmetrischen kryptographischen Schlüsselpaars. Ferner empfängt das Nutzer-Computersystem beispielsweise eine Schlüssel-ID zum Identifizieren des von dem Authentisierungstoken erzeugten serverindividuellen asymmetrischen kryptographischen Schlüsselpaars. Die Response umfasst eine Signatur der ersten Challenge mit einem dem Authentifizierungsschlüssel zugehörigen serverindividuellen Authentisierungsschlüssel in Form eines privaten kryptographischen Schlüssels des erzeugten asymmetrischen kryptographischen Schlüsselpaars. Beispielsweise setzt das Erstellen der ersten Response ein erfolgreiches Authentifizieren des Nutzers gegenüber dem Authentisierungstoken voraussetzt. In Block 314 leitet das Nutzer-Computersystem unter Verwendung der Browseranwendung die Response mit dem serverindividuellen Authentifizierungsschlüssel und beispielsweise der Schlüssel-ID über den ersten verschlüsselten Kommunikationskanal an den Dienst-Server zum Speichern des serverindividuellen Authentifizierungsschlüssels in Verbindung mit dem personalisierten Nutzerkonto des Nutzers weiter. Dabei dient die erste Response als Nachweis, dass der Nutzer über den zu dem Authentifizierungsschlüssel gehörigen Authentisierungsschlüssel verfügt.

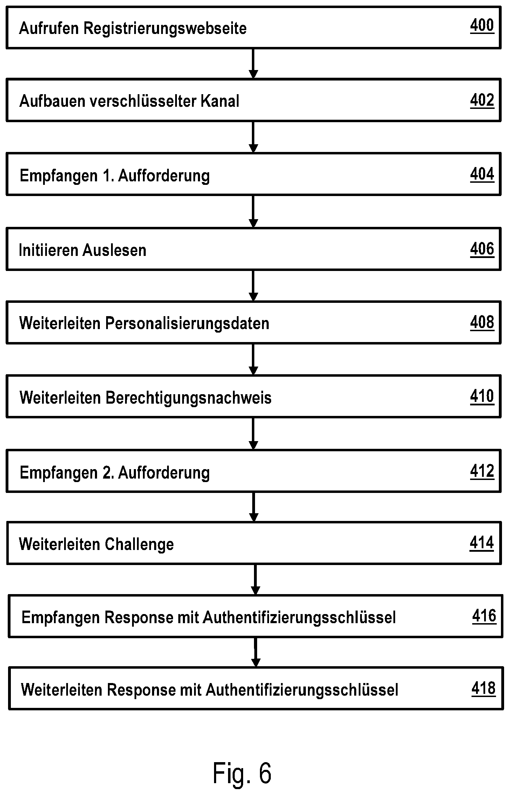

Figur 6 zeigt eine Ausführungsform eines exemplarischen Verfahrens zum Implementieren eines Authentifizierungsmechanismus. In Block 400 ruft das Nutzer-Computersystem eine von dem Dienst-Server bereitgestellte Registrierungswebseite zum Registrieren des Nutzers bei dem Dienst-Server über ein Netzwerk unter Verwendung einer Browseranwendung. Im Zuge des Aufrufens der Registrierungswebseite wird ein erster verschlüsselter Kommunikationskanal zwischen dem Nutzer-Computersystem und dem Dienst-Server aufgebaut wird, was beispielsweise ein Authentifizieren des Dienst-Servers unter Verwendung eines Dienst-Server-Zertifikats umfasst. Das Registrieren des Nutzers umfasst ein Erstellen eines personalisierten Nutzerkontos für den Nutzer durch den Dienst-Server. In Block 402 wird ein parallelen zweiter verschlüsselter Kommunikationskanal zwischen dem Nutzer-Computersystem, beispielsweise der Browseranwendung oder einer ID-Anwendung und dem Dienst-Server aufgebaut. Im Zuge des Aufbaus des zweiten verschlüsselten Kommunikationskanals erfolgt beispielsweise eine gegenseitige Authentifizierung von Nutzer und Dienst-Server unter Verwendung eines Nutzer-Zertifikats und des Dienst-Server-Zertifikats. Der Aufbau des zweiten verschlüsselten Kommunikationskanals kann beispielsweise durch einen Aufruf eines von der Registrierungswebseite umfassten Links des Dienst-Servers umfassen, wobei der Link beispielsweise von der Browseranwendung direkt aufgerufen oder an die ID-Anwendung zum Aufrufen weitergeleitet wird. In Block 404 wird eine erste Aufforderung von dem Dienst-Server durch das Nutzer-Computersystem empfangen zum Bereitstellen von Personalisierungsdaten des Nutzers zur Personalisierung des Nutzerkontos. In Block 406 wird durch das Nutzer-Computersystem ein Auslesen der bereitzustellenden Personalisierungsdaten aus einer elektronischen Personalisierungsdatenquelle initiiert. Bei der Personalisierungsdatenquelle handelt es sich beispielsweise um den Speicher des Nutzer-Computersystem. Diese Auslesen setzt beispielsweise eine erfolgreiche Authentifizierung des Nutzers gegenüber dem Nutzer-Computersystem und damit dem Speicher des Nutzer-Computersystems voraus. Falls bereits ein oder mehrere der bereitzustellenden Personalisierungsdaten von dem im Zuge der gegenseitigen Authentifizierung an den Dienst-Server gesendeten Nutzer-Zertifikat umfasst sind, werden beispielsweise nur die nicht umfassten Personalisierungsdaten aus der Personalisierungsdatenquelle ausgelesen. In Block 408 werden die ausgelesenen Personalisierungsdaten durch das Nutzer-Computersystem an den Dienst-Server über den zweiten verschlüsselten Kommunikationskanal weitergeleitet. In Block 410 wird ein Berechtigungsnachweis in Form einer Signatur der bereitzustellenden Personalisierungsdaten mit einem dem Nutzer-Zertifikat zugehörigen Signaturschlüssel des Nutzers, d.h. einem entsprechenden privaten kryptographischen Schlüssel, erstellt und an den Dienst-Server weitergeleitet. Beispielsweise umfasst das Nutzer-Zertifikat Hashwerte für alle bereitzustellenden Personalisierungsdaten, beispielsweise entweder in Form einer Mehrzahl von Hashwerten jeweils mit Hashwerten für individuelle Personalisierungsdaten oder einem Hashwert für eine Kombination der Personalisierungsdaten. Die Blöcke 412 bis 418 entsprechen den Blöcke 308 bis 314 des Verfahrens aus Figur 5.

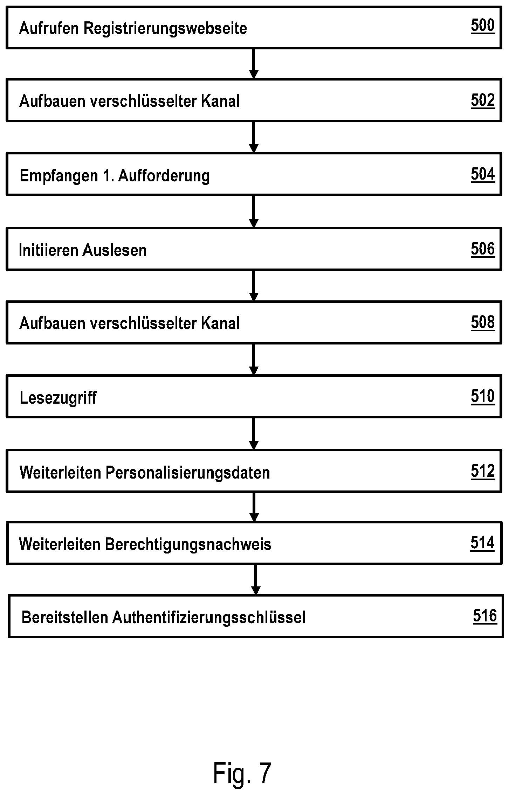

Figur 7 zeigt eine Ausführungsform eines exemplarischen Verfahrens zum Implementieren eines Authentifizierungsmechanismus. Die Blöcke 500 bis 504 entsprechen den Blöcke 400 bis 404 des Verfahrens aus Figur 6. In Block 506 wird durch das Nutzer-Computersystem ein Auslesen der bereitzustellenden Personalisierungsdaten aus einer elektronischen Personalisierungsdatenquelle initiiert. Bei der Personalisierungsdatenquelle handelt es sich beispielsweise um ein Sicherheitselement des Nutzer-Computersystem oder um ein in Kommunikationsverbindung mit dem Nutzer-Computersystem stehenden ID-Token. Die Personalisierungsdatenquelle wird von einem ID-Provider-Server ausgelesen. Beispielsweise leitet das Nutzer-Computersystem die erste Aufforderung an den ID-Provider-Server weiter. In Block 508 wird ein dritter verschlüsselter Kommunikationskanal zwischen der Personalisierungsdatenquelle und dem ID-Provider-Servers über das Nutzer-Computersystem und das Netzwerk aufgebaut. Hierbei wird der ID-Provider-Server durch die Personalisierungsdatenquelle unter Verwendung eines ID-Provider-Server-Zertifikats des ID-Provider-Servers authentifiziert. Das ID-Provider-Server-Zertifikat umfasst eine Leseberechtigung für einen Lesezugriff des ID-Provider-Servers auf die in dem geschützten Speicherbereich der Personalisierungsdatenquelle gespeicherten Personalisierungsdaten. Das Authentifizieren umfasst ein Prüfen der Leseberechtigung des ID-Provider-Servers durch die Personalisierungsdatenquelle. Beispielsweise erfolgt eine gegenseitige Authentifizierung zwischen Personalisierungsdatenquelle und ID-Provider-Server unter Verwendung eines Zertifikats der Personalisierungsdatenquelle und des ID-Provider-Server-Zertifikat. In Block 510 erfolgt ein Lesezugriffs des ID-Provider-Servers auf die in der Personalisierungsquelle gespeicherten bereitzustellenden Personalisierungsdaten über das Netzwerk und das Nutzer-Computersystem. In Block 512 werden die ausgelesenen Personalisierungsdaten von dem ID-Provider-Server an den Dienst-Server über das Netzwerk und das Nutzer-Computersystem weitergeleitet. In Block 514 sendet der ID-Provider-Server einen Berechtigungsnachweis für den Nutzers zur Nutzung der Personalisierungsdaten in Form einer unter Verwendung eines Signaturschlüssels des ID-Provider-Servers erstellten Signatur der ausgelesenen Personalisierungsdaten an den Dienst-Server. Dies erfolgt beispielsweise zusammen mit dem Senden der ausgelesenen Personalisierungsdaten. Die Signatur des ID-Provider-Servers ist eine Bestätigung dafür, dass es sich bei den Personalisierungsdaten um Personalisierungsdaten handelt, welche aus einer sich in der Verfügungshoheit des Nutzers befinden Personalisierungsquelle ausgelesen wurden. In Block 516 wird durch das Nutzer-Computersystem ein serverindividueller Authentifizierungsschlüssel unter Verwendung des Authentisierungstokens für den Dienst-Server bereitgestellt. Der Block 516 entspricht den Blöcke 308 bis 314 des Verfahrens aus Figur 5 bzw. den Blöcke 412 bis 318 des Verfahrens aus Figur 6.

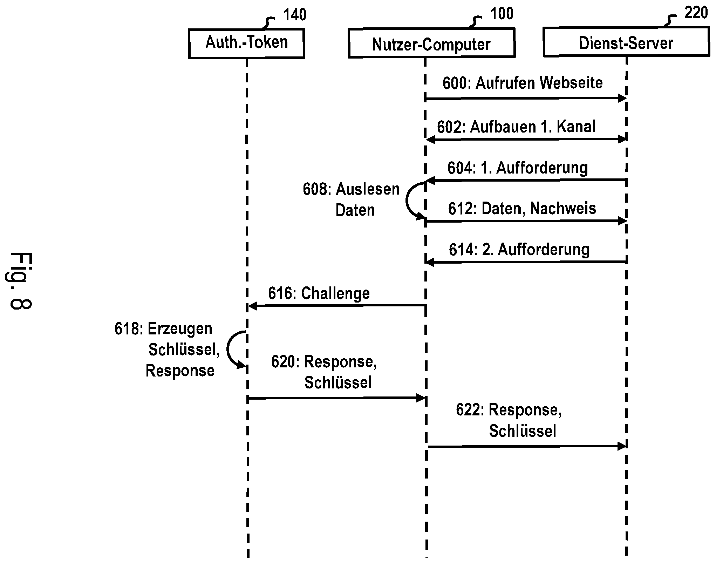

Figur 8 zeigt eine Ausführungsform eines exemplarischen Verfahrens zum Implementieren eines Authentifizierungsmechanismus. In Schritt 600 ruft das Nutzer-Computersystem 100 die Registrierungswebseite des Dienst-Servers 220 auf. In Schritt 602 wird ein erster verschlüsselter Kommunikationskanal zwischen dem Nutzer-Computersystem 100 und dem Dienst-Servers 220 aufgebaut. In Schritt 604 empfängt das Nutzer-Computersystem 100 eine Aufforderung zum Auslesen der bereitzustellenden Personalisierungsdaten, welche das Nutzer-Computersystem 100 in Schritt 608 aus einer Personalisierungsdatenquelle, beispielsweise einen Speicher des Nutzer-Computersystems 100, ausliest. In Schritt 612 werden die ausgelesenen Personalisierungsdaten zusammen mit einem Berechtigungsnachweis zur Nutzung der ausgelesenen Personalisierungsdaten, wie etwa eine Signatur durch das Nutzer-Computersystems 100, an den Dienst-Servers 220 weitergeleitet. In Schritt 614 empfängt das Nutzer-Computersystem 100 eine Aufforderung zum Bereitstellen eines serverindividuellen Authentifizierungsschlüssel für den Dienst-Servers 220, beispielsweise in der Form "[ConnTLS1_WS(CertWS)] HTTPS 200 < Challenge, User-ID, WS-FIDO-Register-Endpoint>" als Antwort auf ein "[ConnTLS1_WS(CertWS)] HTTPS GET / WS-Endpoint". Die Aufforderung umfasst beispielsweise eine Challenge, welche in Schritt 616 von dem Nutzer-Computersystem 100 an einen Authentisierungstoken 140 weitergeleitet wird, beispielsweise in der Form "[Browser-Api] < Domain, Challenge, User-ID>". Der Authentisierungstoken 140 erzeugt daraufhin in Schritt 618 ein serverindividuelles asymmetrisches Schlüsselpaar mit einem Authentisierungsschlüssel und einem Authentifizierungsschlüssel. Ferner erzeugt der Authentisierungstoken 140 beispielsweise eine Schlüssel-ID für das serverindividuelles asymmetrisches Schlüsselpaar. Die erzeugten Daten werden beispielsweise gespeichert und die Response auf die Challenge in Form einer Signatur der Challenge mit dem Authentisierungsschlüssel erstellt. In Schritt 620 sendet der Authentisierungstoken 140 die Response, den Authentifizierungsschlüssel und beispielsweise die Schlüssel-ID an das Nutzer-Computersystem 100. Dies erfolgt beispielsweise in der Form "[Browser-Api] < ID, pubKey, Signature>". In Schritt 622 leitet das Nutzer-Computersystem 100 die in Schritt 620 empfangene Daten an den Dienst-Server 220 weiter, beispielsweise in der Form "ConnTLS1_WS(CertWS)] HTTPS GET/ WS-FIDO-Register-Endpoint < ID, pubKey Signature>". Nach Ausführungsformen bestätigt der Dienst-Server 220 dem Nutzer-Computersystem 100 den Empfang der weitergeleiteten Daten, beispielsweise in der Form "[ConnTLS1_WS(CertWS)] HTTPS 200".

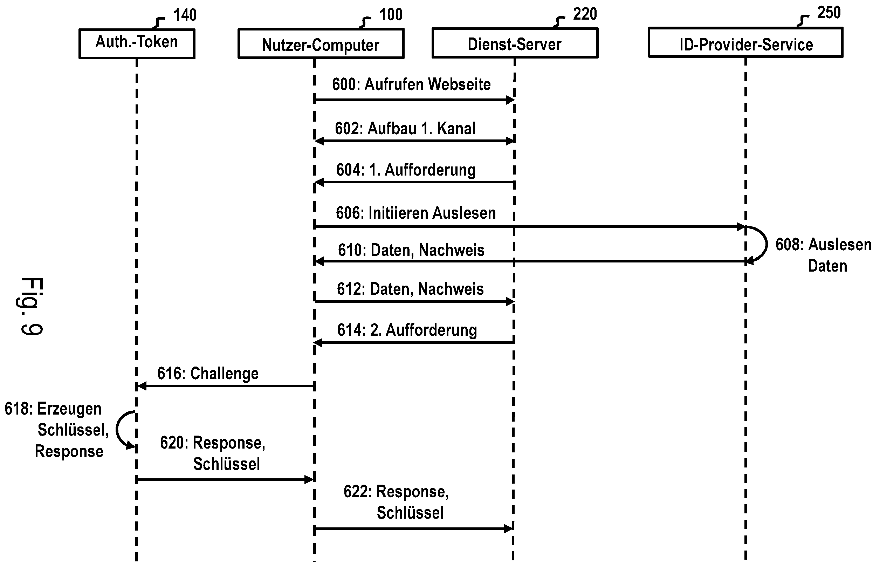

Figur 9 zeigt eine Ausführungsform eines exemplarischen Verfahrens zum Implementieren eines Authentifizierungsmechanismus, wobei es sich um eine alternative Ausführungsform des Verfahrens der Figur 8 unter Verwendung eines ID-Provider-Servers 250 handelt. In Schritt 600 ruft das Nutzer-Computersystem 100 die Registrierungswebseite des Dienst-Servers 220 auf. In Schritt 602 wird ein erster verschlüsselter Kommunikationskanal zwischen dem Nutzer-Computersystem 100 und dem Dienst-Servers 220 aufgebaut. In Schritt 604 empfängt das Nutzer-Computersystem 100 eine Aufforderung zum Auslesen der bereitzustellenden Personalisierungsdaten. In Schritt 606 initiiert das Nutzer-Computersystem 100 ein Auslesen der bereitzustellenden Personalisierungsdaten aus einer Personalisierungsdatenquelle, wie beispielsweise einem Sicherheitselement des Nutzer-Computersystems 100 oder einem mit dem Nutzer-Computersystem 100 in Kommunikationsverbindung stehenden ID-Tokens, durch einen ID-Provider-Server 250. Beispielsweise leitet das Nutzer-Computersystem 100 die Aufforderung an den ID-Provider-Server 250 weiter. In Schritt 608 liest der ID-Provider-Server 250 die bereitzustellenden Personalisierungsdaten aus der Personalisierungsdatenquelle, beispielsweise über das Netzwerk und das Nutzer-Computersystem 100, aus. In Schritt 610 werden die ausgelesenen Personalisierungsdaten zusammen mit einem Berechtigungsnachweis zur Nutzung der ausgelesenen Personalisierungsdaten, wie etwa eine Signatur durch das ID-Provider-Server 250, an das Nutzer-Computersystem 100 gesendet und von diesem in Schritt 612 an den Dienst-Servers 220 weitergeleitet. In Schritt 614 empfängt das Nutzer-Computersystem 100 eine Aufforderung zum Bereitstellen eines serverindividuellen Authentifizierungsschlüssel für den Dienst-Servers 220, beispielsweise in der Form "[ConnTLS1_WS(CertWS)] HTTPS 200 < Challenge, User-ID, WS-FIDO-Register-Endpoint>" als Antwort auf ein "[ConnTLS1_WS(CertWS)] HTTPS GET / WS-Endpoint". Die Aufforderung umfasst beispielsweise eine Challenge, welche in Schritt 616 von dem Nutzer-Computersystem 100 an einen Authentisierungstoken 140 weitergeleitet wird, beispielsweise in der Form "[Browser-Api] < Domain, Challenge, User-ID>". Der Authentisierungstoken 140 erzeugt daraufhin in Schritt 618 ein serverindividuelles asymmetrisches Schlüsselpaar mit einem Authentisierungsschlüssel und einem Authentifizierungsschlüssel. Ferner erzeugt der Authentisierungstoken 140 beispielsweise eine Schlüssel-ID für das serverindividuelles asymmetrisches Schlüsselpaar. Die erzeugten Daten werden beispielsweise gespeichert und die Response auf die Challenge in Form einer Signatur der Challenge mit dem Authentisierungsschlüssel erstellt. In Schritt 620 sendet der Authentisierungstoken 140 die Response, den Authentifizierungsschlüssel und beispielsweise die Schlüssel-ID an das Nutzer-Computersystem 100. Dies erfolgt beispielsweise in der Form "[Browser-Api] < ID, pubKey, Signature>". In Schritt 622 leitet das Nutzer-Computersystem 100 die in Schritt 620 empfangene Daten an den Dienst-Server 220 weiter, beispielsweise in der Form "ConnTLS1_WS(CertWS)] HTTPS GET / WS-FIDO-Register-Endpoint < ID, pubKey Signature>". Nach Ausführungsformen bestätigt der Dienst-Server 220 dem Nutzer-Computersystem 100 den Empfang der weitergeleiteten Daten, beispielsweise in der Form "[ConnTLS1_WS(CertWS)] HTTPS 200".

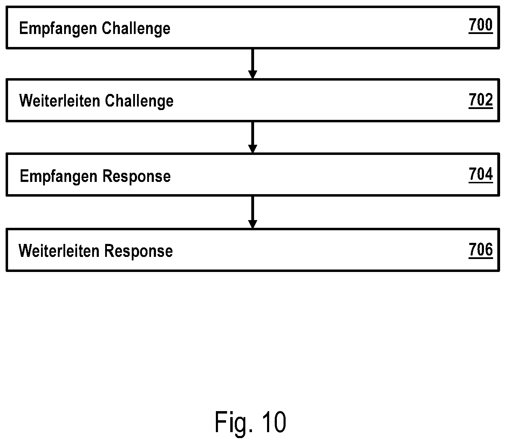

Figur 10 zeigt eine Ausführungsform eines exemplarischen Verfahrens zum Authentisieren eines Nutzers. In Block 700 empfängt das Nutzer-Computersystem Challenge von dem Dienst-Server zum Authentifizieren des Nutzers. Beispielsweise in Antwort auf ein Aufrufen einer Webseite des Dienst-Server, welche eine Authentifizierung des Nutzers, beispielsweise im Zuge einer Anmeldung des Nutzers bei dem Dienst-Server, erfordert. In Block 702 leitet das Nutzer-Computersystem die Challenge an den Authentisierungstoken weiter, beispielsweise in zusammen mit einem eindeutigen Dienst-Server-Attribut. In Block 704 empfängt das Nutzer-Computersystem von dem Authentisierungstoken eine Response auf die Challenge. Der Authentisierungstoken bestimmt beispielsweise unter Verwendung des eindeutigen Dienst-Server-Attributs einen für diesen Dienst-Server gespeicherten serverindividuellen Authentisierungsschlüssel. Mit diesem serverindividuellen Authentisierungsschlüssel signiert der Authentisierungstoken die Challenge, nachdem sich der Nutzer beispielsweise erfolgreich gegenüber dem Authentisierungstoken authentifiziert hat. Ferner empfängt das Nutzer-Computersystem von dem Authentisierungstoken beispielsweise eine Schlüssel-ID des Schlüsselpaars, dessen serverindividuellen Authentisierungsschlüssel für die Signatur verwendet wurde. In Block 706 leitet das Nutzer-Computersystem die Response, beispielsweise zusammen mit der Schlüssel-ID, bei welcher es sich beispielsweise um eine Zufallszahl handelt, an den Dienst-Server weiter. Der Dienst-Server verfügt über den zugehörigen serverindividuellen Authentifizierungsschlüssel zum Validieren der von dem Nutzer als Authentisierungsnachweis bereitgestellten. Den zu verwendenden Authentifizierungsschlüssel bestimmt der Dienst-Server beispielsweise unter Verwendung der Schlüssel-ID. Im Falle einer erfolgreichen Validierung wird die Response und damit der Nutzer dem personalisierten Nutzerkonto zugeordnet, in Verbindung mit dem der verwendete Authentifizierungsschlüssel seitens des Dienst-Server gespeichert ist.

### Bezugszeichenliste

- 100: Nutzer-Computersystem
- 102: Prozessor
- 104: Speicher
- 106: Programminstruktionen
- 108: Browseranwendung
- 110: ID-Anwendung
- 112: Nutzer-Zertifikat
- 114: Kommunikationsschnittstelle
- 116: Kommunikationsschnittstelle
- 120: Personalisierungsdaten
- 140: Authentisierungstoken
- 142: Prozessor
- 144: Speicher
- 146: Programminstruktionen
- 148: Authentisierungsschlüssel
- 150: Authentifizierungsschlüssel
- 152: Kommunikationsschnittstelle
- 170: ID-Token
- 172: Prozessor
- 174: Speicher
- 176: Programminstruktionen
- 178: Kommunikationsschnittstelle
- 190: System
- 192: Netzwerk
- 220: Dienst-Server
- 222: Prozessor
- 224: Speicher
- 226: Programminstruktion
- 228: Web-Dienste
- 230: Registrierungswebseite
- 232: Dienst-Server-Zertifikat
- 234: Nutzerkonto
- 236: Kommunikationsschnittstelle
- 250: ID-Provider-Server
- 252: Prozessor
- 254: Speicher
- 256: Programminstruktionen
- 258: ID-Provider-Server-Zertifikat
- 260: Signaturschlüssel
- 262: Signaturprüfschlüssel
- 264: Kommunikationsschnittstelle

## Patentansprüche

1. Verfahren zum Implementieren eines Authentifizierungsmechanismus unter Verwendung eines Nutzer-Computersystems (100), wobei der Authentifizierungsmechanismus eine personalisierte, serverindividuelle Authentisierung eines Nutzers gegenüber einem Dienst-Server (220) unter Verwendung eines Authentisierungstokens (140) bereitstellt, wobei das Verfahren umfasst:
• Aufrufen einer von dem Dienst-Server (220) bereitgestellten Registrierungswebseite (230) zum Registrieren des Nutzers bei dem Dienst-Server (220) durch das Nutzer-Computersystem (100) über ein Netzwerk (192) unter Verwendung einer Browseranwendung (108), wobei im Zuge des Aufrufens der Registrierungswebseite (230) ein erster verschlüsselter Kommunikationskanal zwischen dem Nutzer-Computersystem (100) und dem Dienst-Server (220) aufgebaut wird, wobei das Nutzer-Computersystem (100) den Dienst-Server (220) im Zuge des Aufbaus des ersten verschlüsselten Kommunikationskanals unter Verwendung eines Dienst-Server-Zertifikats (232) authentifiziert, wobei das Registrieren des Nutzers ein Erstellen eines personalisierten Nutzerkontos (234) für den Nutzer durch den Dienst-Server (220) umfasst,
• Aufbau eines parallelen zweiten verschlüsselten Kommunikationskanals zwischen dem Nutzer-Computersystem (100) und dem Dienst-Server (220), wobei im Zuge des Aufbaus des zweiten verschlüsselten Kommunikationskanals eine gegenseitige Authentifizierung von Nutzer und Dienst-Server (220) unter Verwendung eines Nutzer-Zertifikats (112) und des Dienst-Server-Zertifikats (232) erfolgt,
• Empfangen einer ersten Aufforderung von dem Dienst-Server (220) durch das Nutzer-Computersystem (100) zum Bereitstellen von Personalisierungsdaten (120) des Nutzers zur Personalisierung des Nutzerkontos (234),
• Initiieren eines Auslesens der bereitzustellenden Personalisierungsdaten (120) durch das Nutzer-Computersystem (100) aus einer elektronischen Personalisierungsdatenquelle, wobei ein Auslesen der bereitzustellenden Personalisierungsdaten (120) ein erfolgreiches Authentisieren des Nutzers gegenüber der Personalisierungsdatenquelle voraussetzt,
• Weiterleiten der aus der Personalisierungsdatenquelle ausgelesenen Personalisierungsdaten (120) durch das Nutzer-Computersystem (100) an den Dienst-Server (220) über den zweiten verschlüsselten Kommunikationskanal,
• Weiterleiten eines Berechtigungsnachweises des Nutzers zur Nutzung der Personalisierungsdaten (120) als seine eigenen Personalisierungsdaten durch das Nutzer-Computersystem (100) an den Dienst-Server (220) über den zweiten verschlüsselten Kommunikationskanal,
• Empfangen einer zweiten Aufforderung von dem Dienst-Server (220) durch das Nutzer-Computersystem (100) unter Verwendung der Browseranwendung (108) über den ersten verschlüsselten Kommunikationskanal zum Bereitstellen eines serverindividuellen Authentifizierungsschlüssels (150) zum zukünftigen Authentifizieren des Nutzers des personalisierten Nutzerkontos (234), wobei die zweite Aufforderung eine ersten Challenge umfasst,
• Weiterleiten der ersten Challenge von dem Nutzer-Computersystem (100) an einen Authentisierungstoken (140) des Nutzers,
• Empfangen einer von dem Authentisierungstoken (140) erstellten ersten Response auf die erste Challenge durch das Nutzer-Computersystem (100) zusammen mit einem serverindividuellen Authentifizierungsschlüssel (150) für den Dienst-Server (220) in Form eines öffentlichen kryptographischen Schlüssels eines von dem Authentisierungstoken (140) unter Verwendung eines eindeutigen Dienst-Server-Attributs erzeugten asymmetrischen kryptographischen Schlüsselpaars, wobei die erste Response eine Signatur der ersten Challenge mit einem dem Authentifizierungsschlüssel (150) zugehörigen serverindividuellen Authentisierungsschlüssel (148) in Form eines privaten kryptographischen Schlüssels des erzeugten asymmetrischen kryptographischen Schlüsselpaars umfasst, wobei ein Erstellen der ersten Response ein erfolgreiches Authentifizieren des Nutzers gegenüber dem Authentisierungstoken (140) voraussetzt,
• Weiterleiten der ersten Response und des serverindividuellen Authentifizierungsschlüssels (150) durch das Nutzer-Computersystem (100) unter Verwendung der Browseranwendung (108) über den ersten verschlüsselten Kommunikationskanal an den Dienst-Server (220) zum Speichern des serverindividuellen Authentifizierungsschlüssels (150) in Verbindung mit dem personalisierten Nutzerkonto (234) des Nutzers, wobei die erste Response als Nachweis dient, dass der Nutzer über den zu dem Authentifizierungsschlüssel (150) gehörigen Authentisierungsschlüssel (148) verfügt, wobei der gespeicherte Authentifizierungsschlüssel (150) den Dienst-Server (220) dazu befähigt im Zuge von zukünftigen Authentifizierungen des Nutzers jeweils eine Validität einer von dem Nutzer als Authentisierungsnachweis bereitgestellten zweiten Response mit einer zweiten Signatur einer zweiten Challenge des Dienst-Servers (220) zu prüfen, welche unter Verwendung des serverindividuellem Authentisierungsschlüssels (148) erstellt wurde, und dem personalisierten Nutzerkonto (234) des Nutzers zuzuordnen.

2. Verfahren nach Anspruch 1, wobei es sich bei der Personalisierungsdatenquelle um einen Speicher (104) des Nutzer-Computersystems (100) handelt und das Auslesen der Personalisierungsdatenquelle durch das Nutzer-Computersystem (100) erfolgt.

3. Verfahren nach einem der Ansprüche 1 bis 2, wobei das Nutzer-Zertifikat (112) die bereitzustellenden Personalisierungsdaten (120) des Nutzers sowie einen dem Nutzer zugeordneten öffentlichen kryptographischen Schlüssel umfasst, wobei als Berechtigungsnachweis des Nutzers zur Nutzung der Personalisierungsdaten (120) eine durch das Nutzer-Computersystem (100) unter Verwendung eines dem öffentlichen kryptographischen Schlüssels des Nutzers zugehörigen privaten kryptographischen Schlüssels erstellte Signatur der Personalisierungsdaten (120) verwendet wird.

4. Verfahren nach Anspruch 3, wobei das Nutzer-Zertifikat (112) zumindest einen Teil der bereitzustellenden Personalisierungsdaten (120) als Klartext umfasst.

5. Verfahren nach Anspruch 4, wobei das Nutzer-Zertifikat (112) sämtliche bereitzustellenden Personalisierungsdaten (120) als Klartext umfasst, wobei die erste Aufforderung vor dem Aufbau des zweiten verschlüsselten Kommunikationskanal empfangen wird und die Personalisierungsdaten (120) in Form des Nutzer-Zertifikats (112) im Zuge der gegenseitigen Authentifizierung zum Aufbau des zweiten verschlüsselten Kommunikationskanal von dem Nutzer-Computersystem (100) an den Dienst-Server (220) weitergeleitet werden.

6. Verfahren nach eine der Ansprüche 3 bis 4, wobei die erste Aufforderung über den zweiten verschlüsselten Kommunikationskanal empfangen wird und zumindest ein Teil der Personalisierungsdaten (120) zusätzlich zu dem im Zuge der gegenseitigen Authentifizierung zum Aufbau des zweiten verschlüsselten Kommunikationskanal von dem Nutzer-Computersystem (100) an den Dienst-Server (220) gesendeten Nutzer-Zertifikat (112) über den zweiten verschlüsselten Kommunikationskanal weitergeleitet wird.

7. Verfahren nach Anspruch 6, wobei das Nutzer-Zertifikat (112) zumindest einen Teil der bereitzustellenden Personalisierungsdaten (120) jeweils als Hashwert umfasst.

8. Verfahren nach Anspruch 1, wobei es sich bei der Personalisierungsdatenquelle um ein Sicherheitselement (118) des Nutzer-Computersystems (100) handelt, wobei das Sicherheitselement (118) einen geschützten Speicherbereich umfasst, in welchem die Personalisierungsdaten (120) gespeichert sind.

9. Verfahren nach Anspruch 1, wobei es sich bei der Personalisierungsdatenquelle um einen ID-Token (170) handelt, wobei der ID-Token (170) einen elektronischen Speicher (174) mit einem geschützten Speicherbereich umfasst, in welchem die Personalisierungsdaten (120) gespeichert sind, wobei der ID-Token (170) ferner eine Kommunikationsschnittstelle (178) zur Kommunikation mit dem Nutzer-Computersystem (100) umfasst.

10. Verfahren nach einem der Ansprüche 8 oder 9, wobei die Personalisierungsdaten aus der Personalisierungsdatenquelle unter Verwendung eines ID-Provider-Servers (250) ausgelesen werden, wobei das Auslesen ferner umfasst:
• Authentifizieren des ID-Provider-Servers (250) durch die Personalisierungsdatenquelle unter Verwendung eines ID-Provider-Server-Zertifikats (258) des ID-Provider-Servers (250) im Zuge eines Aufbaus eines dritten verschlüsselten Kommunikationskanals zwischen der Personalisierungsdatenquelle und dem ID-Provider-Servers (250) über das Nutzer-Computersystem (100) und das Netzwerk (192), wobei das ID-Provider-Server-Zertifikat (258) eine Leseberechtigung für einen Lesezugriff des ID-Provider-Servers (250) auf die in dem geschützten Speicherbereich der Personalisierungsdatenquelle gespeicherten Personalisierungsdaten (120) umfasst, wobei das Authentifizieren ein Prüfen der Leseberechtigung des ID-Provider-Servers (250) durch die Personalisierungsdatenquelle umfasst,
• Durchführen des Lesezugriffs des ID-Provider-Servers (250) auf die in der Personalisierungsquelle gespeicherten bereitzustellenden Personalisierungsdaten (120) über das Netzwerk (192) und das Nutzer-Computersystem (100),
• Senden der ausgelesenen Personalisierungsdaten (120) von dem ID-Provider-Server (250) an den Dienst-Server (220) über das Netzwerk (192) und das Nutzer-Computersystem (100), wobei der ID-Provider-Server (250) den Berechtigungsnachweis für den Nutzers zur Nutzung der Personalisierungsdaten (120) in Form einer unter Verwendung eines Signaturschlüssels (260) des ID-Provider-Servers (250) erstellten Signatur der ausgelesenen Personalisierungsdaten (120) sendet, wobei die Signatur des ID-Provider-Servers (250) eine Bestätigung dafür ist, dass es sich bei den Personalisierungsdaten (120) um Personalisierungsdaten (120) handelt, welche aus einer sich in der Verfügungshoheit des Nutzers befinden Personalisierungsquelle ausgelesen wurden.

11. Verfahren nach einem der vorangehenden Ansprüche, wobei eine ID-Anwendung (110) auf dem Nutzer-Computersystem (100) verwendet wird, welche den zweiten Kommunikationskanal aufbaut, die erste Aufforderung empfängt, das Auslesen der bereitzustellenden Personalisierungsdaten (120) initiiert und die ausgelesenen Personalisierungsdaten (120) sowie den Berechtigungsnachweis des Nutzers zur Nutzung der ausgelesenen Personalisierungsdaten (120) weiterleitet, und/oder
wobei die Registrierungswebseite (230) einen Link des Dienst-Servers (220) umfasst, unter welchem ein Auslesen von Personalisierungsdaten (120) zur Personalisierung des Nutzerkontos (234) aus einer elektronischen Personalisierungsdatenquelle durch den Dienst-Server (220) initialisiert wird, und/oder
wobei das Nutzer-Computersystem (100) zusammen mit der ersten Challenge ferner eine von dem Authentisierungstoken (140) erzeugte Schlüssel-ID für das serverindividuelle kryptographische Schlüsselpaar aus Authentisierungsschlüssel (148) und Authentifizierungsschlüssel (150) empfängt und den Schlüssel-ID zusammen mit der ersten Challenge an den Dienst-Server (220) weiterleitet, und/oder
wobei es sich bei dem Authentisierungstoken (140) um eine externe Komponente oder eine interne Komponente des Nutzer-Computersystems (100) handeln, wobei der Authentisierungstoken (140) einen geschützten Speicherbereich umfasst, in welchem der serverindividuelle Authentisierungsschlüssel (148) gespeichert ist, und/oder
wobei das Verfahren zum Authentisieren des Nutzers unter Verwendung des Authentisierungsschlüssels (148) gegenüber dem Dienst-Server (220) ferner umfasst:
• Empfangen der zweiten Challenge von dem Dienst-Server (220) durch das Nutzer-Computersystem (100),
• Weiterleiten der zweiten Challenge von dem Nutzer-Computersystem (100) an den Authentisierungstoken (140),
• Empfangen einer von dem Authentisierungstoken (140) erstellten zweiten Response auf die zweite Challenge durch das Nutzer-Computersystem (100), wobei die zweite Response eine Signatur der zweiten Challenge mit dem serverindividuellen Authentisierungsschlüssel (148) des Authentisierungstokens (140) umfasst, wobei ein Erstellen der zweiten Response ein erfolgreiches Authentifizieren des Nutzers gegenüber dem Authentisierungstoken (140) voraussetzt,
• Weiterleiten der zweiten Response durch das Nutzer-Computersystem (100) an den Dienst-Server (220), welcher über den zugehörigen serverindividuellen Authentifizierungsschlüssel (150) zum Validieren der von dem Nutzer als Authentisierungsnachweis bereitgestellten zweiten Response verfügt und die zweiten Response, im Falle einer erfolgreichen Validierung, dem personalisierten Nutzerkonto (234) des Nutzers zuordnet.

12. Nutzer-Computersystem (100) umfassend einen Prozessor (104), einen Speicher (104) mit Programminstruktionen (106) und eine Kommunikationsschnittstelle (114), wobei ein Ausführen der Programminstruktionen (106) durch den Prozessor (104) das Nutzer-Computersystem (100) dazu veranlasst ein Verfahren zum Implementieren eines Authentifizierungsmechanismus auszuführen, wobei der Authentifizierungsmechanismus eine personalisierte, serverindividuelle Authentisierung eines Nutzers gegenüber einem Dienst-Server (220) unter Verwendung eines Authentisierungstokens (140) bereitstellt,
wobei das Verfahren umfasst:
• Aufrufen einer von dem Dienst-Server (220) bereitgestellten Registrierungswebseite (230) zum Registrieren des Nutzers bei dem Dienst-Server (220) durch das Nutzer-Computersystem (100) über ein Netzwerk (192) unter Verwendung einer Browseranwendung (108), wobei im Zuge des Aufrufens der Registrierungswebseite (230) ein erster verschlüsselter Kommunikationskanal zwischen dem Nutzer-Computersystem (100) und dem Dienst-Server (220) aufgebaut wird, wobei das Nutzer-Computersystem (100) den Dienst-Server (220) im Zuge des Aufbaus des ersten verschlüsselten Kommunikationskanals unter Verwendung eines Dienst-Server-Zertifikats (232) authentifiziert, wobei das Registrieren des Nutzers ein Erstellen eines personalisierten Nutzerkontos (234) für den Nutzer durch den Dienst-Server (220) umfasst,
• Aufbau eines parallelen zweiten verschlüsselten Kommunikationskanals zwischen dem Nutzer-Computersystem (100) und dem Dienst-Server (220), wobei im Zuge des Aufbaus des zweiten verschlüsselten Kommunikationskanals eine gegenseitige Authentifizierung von Nutzer und Dienst-Server (220) unter Verwendung eines Nutzer-Zertifikats (112) und des Dienst-Server-Zertifikats (232) erfolgt,
• Empfangen einer ersten Aufforderung von dem Dienst-Server (220) durch das Nutzer-Computersystem (100) zum Bereitstellen von Personalisierungsdaten (120) des Nutzers zur Personalisierung des Nutzerkontos (234),
• Initiieren eines Auslesens der bereitzustellenden Personalisierungsdaten (120) durch das Nutzer-Computersystem (100) aus einer elektronischen Personalisierungsdatenquelle, wobei ein Auslesen der bereitzustellenden Personalisierungsdaten (120) ein erfolgreiches Authentisieren des Nutzers gegenüber der Personalisierungsdatenquelle voraussetzt,
• Weiterleiten der aus der Personalisierungsdatenquelle ausgelesenen Personalisierungsdaten (120) durch das Nutzer-Computersystem (100) an den Dienst-Server (220) über den zweiten verschlüsselten Kommunikationskanal,
• Weiterleiten eines Berechtigungsnachweises des Nutzers zur Nutzung der Personalisierungsdaten (120) als seine eigenen Personalisierungsdaten durch das Nutzer-Computersystem (100) an den Dienst-Server (220) über den zweiten verschlüsselten Kommunikationskanal,
• Empfangen einer zweiten Aufforderung von dem Dienst-Server (220) durch das Nutzer-Computersystem (100) unter Verwendung der Browseranwendung (108) über den ersten verschlüsselten Kommunikationskanal zum Bereitstellen eines serverindividuellen Authentifizierungsschlüssels (150) zum zukünftigen Authentifizieren des Nutzers des personalisierten Nutzerkontos (234), wobei die zweite Aufforderung eine ersten Challenge umfasst,
• Weiterleiten der ersten Challenge von dem Nutzer-Computersystem (100) an einen Authentisierungstoken (140) des Nutzers,
• Empfangen einer von dem Authentisierungstoken (140) erstellten ersten Response auf die erste Challenge durch das Nutzer-Computersystem (100) zusammen mit einem serverindividuellen Authentifizierungsschlüssel (150) für den Dienst-Server (220) in Form eines öffentlichen kryptographischen Schlüssels eines von dem Authentisierungstoken (140) unter Verwendung eines eindeutigen Dienst-Server-Attributs erzeugten asymmetrischen kryptographischen Schlüsselpaars, wobei die erste Response eine Signatur der ersten Challenge mit einem dem Authentifizierungsschlüssel (150) zugehörigen serverindividuellen Authentisierungsschlüssel (148) in Form eines privaten kryptographischen Schlüssels des erzeugten asymmetrischen kryptographischen Schlüsselpaars umfasst, wobei ein Erstellen der ersten Response ein erfolgreiches Authentifizieren des Nutzers gegenüber dem Authentisierungstoken (140) voraussetzt,
• Weiterleiten der ersten Response und des serverindividuellen Authentifizierungsschlüssels (150) durch das Nutzer-Computersystem (100) unter Verwendung der Browseranwendung (108) über den ersten verschlüsselten Kommunikationskanal an den Dienst-Server (220) zum Speichern des serverindividuellen Authentifizierungsschlüssels (150) in Verbindung mit dem personalisierten Nutzerkonto (234) des Nutzers, wobei die erste Response als Nachweis dient, dass der Nutzer über den zu dem Authentifizierungsschlüssel (150) gehörigen Authentisierungsschlüssel (148) verfügt, wobei der gespeicherte Authentifizierungsschlüssel (150) den Dienst-Server (220) dazu befähigt im Zuge von zukünftigen Authentifizierungen des Nutzers jeweils eine Validität einer von dem Nutzer als Authentisierungsnachweis bereitgestellten zweiten Response mit einer zweiten Signatur einer zweiten Challenge des Dienst-Servers (220) zu prüfen, welche unter Verwendung des serverindividuellem Authentisierungsschlüssels (148) erstellt wurde, und dem personalisierten Nutzerkonto (234) des Nutzers zuzuordnen.

13. Nutzer-Computersystem (100) nach Anspruch 12, wobei das Nutzer-Computersystem (100) die Personalisierungsdatenquelle und/oder den Authentisierungstoken (140) umfasst.

14. System (190) umfassend ein Nutzer-Computersystem (100) nach Anspruch 12 sowie den Authentisierungstoken (140).

15. System (190) nach Anspruch 14, wobei das System (190) ferner die Personalisierungsdatenquelle und/oder den Dienst-Server (220) und/oder einen ID-Provider-Server (250) umfasst.

## Claims

1. A method for implementing an authentication mechanism using a user computer system (100), the authentication mechanism providing a personalized, server-specific authentication of a user with respect to a service server (220) using an authentication token (140),
the method comprising:
• calling up a registration web page (230) provided by the service server (220) for registering the user with the service server (220) through the user computer system (100) via a network (192) using a browser application (108), in the course of the calling up the registration web page (230), a first encrypted communication channel being set up between the user computer system (100) and the service server (220), the user computer system (100) authenticating the service server (220) in the course of setting up the first encrypted communication channel using a service server certificate (232), registering the user comprising creating a personalized user account (234) for the user through the service server (220),
• setting up a parallel second encrypted communication channel between the user computer system (100) and the service server (220), in the course of setting up the second encrypted communication channel, a mutual authentication of user and service server (220) taking place using a user certificate (112) and the service server certificate (232),
• receiving a first request from the service server (220) by the user computer system (100) for providing the user's personalization data (120) for personalizing the user account (234),
• initiating a read-out of the personalization data (120) to be provided by the user computer system (100) from an electronic personalization data source, a read-out of the personalization data (120) to be provided requiring a successful authentication of the user with respect to the personalization data source,
• forwarding the personalization data (120) read out from the personalization data source by the user computer system (100) to the service server (220) via the second encrypted communication channel,
• forwarding a proof of authorization of the user to use the personalization data (120) as their own personalization data by the user computer system (100) to the service server (220) via the second encrypted communication channel,
• receiving a second request from the service server (220) by the user computer system (100) using the browser application (108) via the first encrypted communication channel for providing a server-specific authenticating key (150) for the future authentication of the user of the personalized user account (234), the second request comprising a first challenge,
• forwarding the first challenge from the user computer system (100) to an authentication token (140) of the user,
• receiving a first response to the first challenge created by the authentication token (140) by the user computer system (100) together with a server-specific authenticating key (150) for the service server (220) in the form of a public cryptographic key of an asymmetric cryptographic key pair generated by the authentication token (140) using a unique service-server attribute, the first response comprising a signature of the first challenge with a server-specific authentication key (148) associated with the authenticating key (150) in the form of a private cryptographic key of the generated asymmetric cryptographic key pair, creating the first response requiring successful authentication of the user with respect to the authentication token (140),
• forwarding the first response and the server-specific authenticating key (150) by the user computer system (100) using the browser application (108) via the first encrypted communication channel to the service server (220) for storing the server-specific authenticating key (150) in connection with the personalized user account (234) of the user, the first response serving as proof that the user has the authentication key (148) associated with the authenticating key (150), the stored authenticating key (150) enabling the service server (220) to verify a validity of a second response provided by the user as proof of authentication with a second signature of a second challenge from the service server (220) in the course of future user authentications, which was created using the server-specific authentication key (148) and assigned to the user's personalized user account (234).

2. The method according to claim 1, wherein the personalization data source is a memory (104) of the user computer system (100) and the personalization data source is read out by the user computer system (100).

3. The method according to any one of claims 1 to 2, wherein the user certificate (112) comprises the user's personalization data (120) to be provided and a public cryptographic key assigned to the user, wherein a signature of the personalization data (120) created by the user computer system (100) using a private cryptographic key associated with the public cryptographic key of the user is used as a proof of authorization for the user to use the personalization data (120).

4. The method according to claim 3, wherein the user certificate (112) comprises at least part of the personalization data (120) to be provided as plain text.

5. The method according to claim 4, wherein the user certificate (112) comprises all personalization data (120) to be provided as plain text, wherein the first request is received before the second encrypted communication channel is set up and the personalization data (120) in the form of the user certificate (112) are forwarded from the user computer system (100) to the service server (220) in the course of the mutual authentication to set up the second encrypted communication channel.

6. The method according to any one of claims 3 to 4, wherein the first request is received via the second encrypted communication channel and at least part of the personalization data (120) is forwarded via the second encrypted communication channel in addition to the user certificate (112) sent by the user computer system (100) to the service server (220) in the course of the mutual authentication to set up the second encrypted communication channel.

7. The method according to claim 6, wherein the user certificate (112) comprises at least part of the personalization data (120) to be provided, as a hash value respectively.

8. The method according to claim 1, wherein the personalization data source is a security element (118) of the user computer system (100), wherein the security element (118) comprises a protected memory area in which the personalization data (120) are stored.

9. The method according to claim 1, wherein the personalization data source is an ID token (170), wherein the ID token (170) comprises an electronic memory (174) having a protected memory area, in which the personalization data (120) is stored, wherein the ID token (170) further comprises a communication interface (178) for communication with the user computer system (100).

10. The method according to any one of claims 8 or 9, wherein the personalization data is read out from the personalization data source using an ID provider server (250), wherein the reading out further comprises:
• authenticating the ID provider server (250) by the personalization data source using an ID provider server certificate (258) of the ID provider server (250) in the course of setting up a third encrypted communication channel between the personalization data source and the ID provider server (250) via the user computer system (100) and the network (192), wherein the ID provider server certificate (258) comprises a read authorization for a read access of the ID provider server (250) to the personalization data (120) stored in the protected memory area of the personalization data source, wherein the authentication comprises a verification of the read authorization of the ID provider server (250) by the personalization data source,
• carrying out the read access of the ID provider server (250) to the personalization data (120) to be provided stored in the personalization source via the network (192) and the user computer system (100),
• sending the read-out personalization data (120) from the ID provider server (250) to the service server (220) via the network (192) and the user computer system (100), wherein the ID provider server (250) sends the proof of authorization for the user to use the personalization data (120) in the form of a signature of the read personalization data (120) created using a signature key (260) of the ID provider server (250), wherein the signature of the ID provider server (250) is a confirmation that the personalization data (120) are personalization data (120) that were read out from a personalization source over which the user has power of disposal.

11. The method according to any one of the preceding claims, wherein an ID application (110) is used on the user computer system (100), the ID application setting up the second communication channel, receiving the first request, initiating the reading out of the personalization data (120) to be provided and forwarding the read-out personalization data (120) and the user's proof of authorization to use the read-out personalization data (120) and/or
wherein the registration web page (230) comprises a link of the service server (220), at which a read out of personalization data (120) for personalization of the user account (234) from an electronic personalization data source by the service server (220) is initialized, and/or
wherein the user computer system (100) together with the first challenge further receives a key ID generated by the authentication token (140) for the server-specific cryptographic key pair of authentication key (148) and authenticating key (150) and forwards the key ID together with the first challenge to the service server (220), and/or
wherein the authentication token (140) is an external component or an internal component of the user computer system (100), wherein the authentication token (140) comprises a protected memory area in which the server-specific authentication key ( 148) is stored, and/or
wherein the method for authenticating the user with respect to the service server (220) using the authentication key (148) further comprises:
• receiving the second challenge from the service server (220) by the user computer system (100),
• forwarding the second challenge from the user computer system (100) to the authentication token (140),
• receiving a second response to the second challenge created by the authentication token (140) by the user computer system (100), wherein the second response comprises a signature of the second challenge with the server-specific authentication key (148) of the authentication token (140), wherein a creation of the second response requires a successful authenticating of the user with respect to the authentication token (140),
• forwarding the second response by the user computer system (100) to the service server (220), which has the associated server-specific authenticating key (150) for validating the second response provided by the user as a proof of authentication and assigned the second response, in the event of a successful validation, to the user's personalized user account (234).

12. A user computer system (100) comprising a processor (104), a memory (104) with program instructions (106) and a communication interface (114), an execution of the program instructions (106) by the processor (104) causing the user computer system (100) to execute a method for implementing an authentication mechanism, the authentication mechanism providing a personalized, server-specific authentication of a user with respect to a service server (220) using an authentication token (140),
the method comprising:
• calling up a registration web page (230) provided by the service server (220) for registering the user with the service server (220) through the user computer system (100) via a network (192) using a browser application (108), in the course of the calling up the registration web page (230), a first encrypted communication channel being set up between the user computer system (100) and the service server (220), the user computer system (100) authenticating the service server (220) in the course of the setting up of the first encrypted communication channel using a service server certificate (232), registering the user comprising creating a personalized user account (234) for the user through the service server (220),
• setting up a parallel second encrypted communication channel between the user computer system (100) and the service server (220), in the course of the setting up of the second encrypted communication channel, a mutual authenticating of user and service server (220) taking place using a user certificate (112) and the service server certificate (232),
• receiving a first request from the service server (220) by the user computer system (100) for providing the user's personalization data (120) for personalizing the user account (234),
• initiating a read-out of the personalization data (120) to be provided by the user computer system (100) from an electronic personalization data source, a read-out of the personalization data (120) to be provided requiring successful authentication of the user with respect to the personalization data source,
• forwarding the personalization data (120) read out from the personalization data source by the user computer system (100) to the service server (220) via the second encrypted communication channel,
• forwarding of a proof of authorization of the user to use the personalization data (120) as their own personalization data by the user computer system (100) to the service server (220) via the second encrypted communication channel,
• receiving a second request from the service server (220) by the user computer system (100) using the browser application (108) via the first encrypted communication channel for providing a server-specific authenticating key (150) for the future authenticating of the user of the personalized user account (234), the second request comprising a first challenge,
• forwarding the first challenge from the user computer system (100) to an authentication token (140) of the user,
• receiving a first response to the first challenge created from the authentication token (140) by the user computer system (100) together with a server-specific authenticating key (150) for the service server (220) in the form of a public cryptographic key of an asymmetric cryptographic key pair generated from the authentication token (140) using a unique service-server attribute, the first response comprising a signature of the first challenge with a server-specific authentication key (148) associated with the authenticating key (150) in the form of a private cryptographic key of the generated asymmetric cryptographic key pair, creating the first response requiring successful authentication of the user with respect to the authentication token (140),
• forwarding the first response and the server-specific authenticating key (150) by the user computer system (100) using the browser application (108) via the first encrypted communication channel to the service server (220) for storing the server-specific authenticating key (150) in connection with the personalized user account (234) of the user, the first response serving as proof that the user has the authentication key (148) associated with the authenticating key (150), the stored authenticating key (150) enabling the service server (220) to verify a validity of a second response provided by the user as proof of authentication with a second signature of a second challenge from the service server (220) in the course of future user authentications, which was created using the server-specific authentication key (148) and assigned to the user's personalized user account (234).

13. The user computer system (100) according to claim 12, wherein the user computer system (100) comprises the personalization data source and/or the authentication token (140).

14. A system (190) comprising a user computer system (100) according to claim 12 and the authentication token (140).

15. The system (190) according to claim 14, wherein the system (190) further comprises the personalization data source and/or the service server (220) and/or an ID provider server (250).

## Revendications

1. Procédé de mise en oeuvre d'un mécanisme d'authentification moyennant l'emploi d'un système informatique d'utilisateur (100), dans lequel le mécanisme d'authentification procure une authentification personnalisée, spécifique à un serveur, d'un utilisateur vis-à-vis d'un serveur de service (220) moyennant l'emploi d'un jeton d'identification (140), le procédé comprenant :
• la consultation d'une page web d'enregistrement (230) fournie par le serveur de service (220) permettant l'enregistrement de l'utilisateur auprès du serveur de service (220) par le système informatique d'utilisateur (100), par le biais d'un réseau (192), moyennant l'emploi d'une application de navigateur (108), où, dans le cadre de la consultation de la page web d'enregistrement (230), un premier canal de communication chiffré est établi entre le système informatique d'utilisateur (100) et le serveur de service (220), où le système informatique d'utilisateur (100) authentifie le serveur de service (220) dans le cadre de l'établissement du premier canal de communication chiffré moyennant l'emploi d'un certificat de serveur de service (232), où l'enregistrement de l'utilisateur comprend l'établissement d'un compte d'utilisateur (234) personnalisé pour l'utilisateur par le serveur de service (220),
• l'établissement d'un deuxième canal de communication chiffré, parallèle, entre le système informatique d'utilisateur (100) et le serveur de service (220), où, dans le cadre de l'établissement du deuxième canal de communication chiffré, une authentification réciproque de l'utilisateur et du serveur de service (200) a lieu moyennant l'emploi d'un certificat d'utilisateur (112) et du certificat de serveur de service (232),
• la réception d'une première demande du serveur de service (220), par le système informatique d'utilisateur (100), de la fourniture de données de personnalisation (120) de l'utilisateur pour la personnalisation du compte d'utilisateur (234),
• l'initiation d'une lecture des données de personnalisation (120) à fournir, par le système informatique d'utilisateur (100), à partir d'une source de données de personnalisation électronique, où une lecture des données de personnalisation (120) à fournir est conditionnée à une authentification réussie de l'utilisateur vis-à-vis de la source de données de personnalisation,
• la transmission des données de personnalisation (120) lues à partir de la source de données de personnalisation par le système informatique d'utilisateur (100) au serveur de service (220) par le biais du deuxième canal de communication chiffré,
• la transmission d'un justificatif d'autorisation de l'utilisateur pour l'utilisation des données de personnalisation (120), en tant que ses propres données de personnalisation, par le système informatique d'utilisateur (100), au serveur de service (220) par le biais du deuxième canal de communication chiffré,
• la réception d'une deuxième demande du serveur de service (220), par le système informatique d'utilisateur (100), moyennant l'emploi de l'application de navigateur (108) par le biais du premier canal de communication chiffré, pour la fourniture d'une clé d'authentification (150) spécifique au serveur pour l'authentification ultérieure de l'utilisateur du compte d'utilisateur (234) personnalisé, où la deuxième demande comprend un premier défi,
• la transmission du premier défi du système informatique d'utilisateur (100) à un jeton d'identification (140) de l'utilisateur,
• la réception d'une première réponse établie par le jeton d'identification (140) suite au premier défi, par le système informatique d'utilisateur (100) conjointement avec une clé d'authentification (150) spécifique au serveur, pour le serveur de service (220), sous la forme d'une clé cryptographique publique d'une paire de clés cryptographiques asymétrique créée moyennant l'emploi d'un attribut de serveur de service (220) distinctif par le jeton d'authentification (140), où la première réponse comprend une signature du premier défi avec une clé d'identification (148), spécifique au serveur correspondant à la clé d'authentification (150), sous la forme d'une clé cryptographique privée de la paire de clés cryptographiques asymétrique créée, où un établissement de la première réponse est conditionnée à une authentification réussie de l'utilisateur vis-à-vis du jeton d'identification (140),
• la transmission de la première réponse et de la clé d'authentification (150) spécifique au serveur par le système informatique d'utilisateur (100) moyennant l'emploi de l'application de navigateur (108) par le biais du premier canal de communication chiffré au serveur de service (220) pour l'enregistrement de la clé d'authentification (150) spécifique au serveur en liaison avec le compte d'utilisateur (234) personnalisé de l'utilisateur, où la première réponse sert de justificatif que l'utilisateur dispose de la clé d'identification (148) correspondant à la clé d'authentification (150), où la clé d'authentification (150) enregistrée permet au serveur de service (220) de vérifier, dans le cadre d'authentifications ultérieures de l'utilisateur, respectivement, une validité d'une deuxième réponse fournie en tant que justificatif d'authentification par l'utilisateur avec une deuxième signature d'un deuxième défi du serveur de service (220), lequel a été établi moyennant l'emploi de la clé d'identification (148) spécifique au serveur et pour l'associer au compte d'utilisateur (234) personnalisé de l'utilisateur.

2. Procédé selon la revendication 1, dans lequel, dans le cas de la source de données de personnalisation, il s'agit d'une mémoire (104) du système informatique d'utilisateur (100), et la lecture de la source de données de personnalisation a lieu par le système informatique d'utilisateur (100).

3. Procédé selon l'une des revendications 1 à 2, dans lequel le certificat d'utilisateur (112) comprend les données de personnalisation (120) de l'utilisateur à fournir ainsi qu'une clé cryptographique publique associée à l'utilisateur, dans lequel une signature des données de personnalisation (120) établie par le système informatique d'utilisateur (100) moyennant l'emploi d'une clé cryptographique privée associée la clé cryptographique publique de l'utilisateur est employée en tant que justificatif d'autorisation de l'utilisateur pour l'utilisation des données de personnalisation (120).

4. Procédé selon la revendication 3, dans lequel le certificat d'utilisateur (112) comprend au moins une partie des données de personnalisation (120) à fournir sous forme de texte clair.

5. Procédé selon la revendication 4, dans lequel le certificat d'utilisateur (112) comprend toutes les données de personnalisation (120) à fournir sous forme de texte clair, dans lequel la première demande est reçue avant l'établissement du deuxième canal de communication chiffré et les données de personnalisation (120) sont transmises au serveur de service (220) sous la forme du certificat d'utilisateur (112) dans le cadre de l'authentification réciproque pour l'établissement du deuxième canal de communication chiffré par le système informatique d'utilisateur (100).

6. Procédé selon l'une des revendications 3 à 4, dans lequel la première demande est reçue par le biais du deuxième canal de communication chiffré et au moins une partie des données de personnalisation (120) est transmise de manière complémentaire au certificat d'utilisateur (112) envoyé dans le cadre de l'authentification réciproque pour l'établissement du deuxième canal de communication chiffré du système informatique d'utilisateur (100) au serveur de service (220) par le biais du deuxième canal de communication chiffré.

7. Procédé selon la revendication 6, dans lequel le certificat d'utilisateur (112) comprend au moins une partie des données de personnalisation (120) à fournir respectivement sous forme de valeur de hachage.

8. Procédé selon la revendication 1, dans lequel, dans le cas de la source de données de personnalisation, il s'agit d'un élément de sécurité (118) du système informatique d'utilisateur (100), dans lequel l'élément de sécurité (118) comprend une zone de mémoire sécurisée dans laquelle les données de personnalisation (120) sont enregistrées.

9. Procédé selon la revendication 1, dans lequel, dans le cas de la source de données de personnalisation, il s'agit d'un jeton d'ID (170), où le jeton d'ID (170) comprend une mémoire (174) électronique avec une zone de mémoire sécurisée dans laquelle les données de personnalisation (120) sont enregistrées, où le jeton d'ID (170) comprend en outre une interface de communication (178) pour la communication avec le système informatique d'utilisateur (100).

10. Procédé selon l'une des revendications 8 ou 9, dans lequel les données de personnalisation sont lues à partir de la source de données de personnalisation moyennant l'emploi d'un serveur fournisseur d'ID (250), dans lequel la lecture comprend en outre :
• l'authentification du serveur fournisseur d'ID (250) par la source de données de personnalisation moyennant l'emploi d'un certificat de serveur fournisseur d'ID (258) du serveur fournisseur d'ID ((250) dans le cadre de l'établissement d'un troisième canal de communication chiffré entre la source de données de personnalisation et le serveur fournisseur d'ID (250), par le biais du système informatique d'utilisateur (100) et du réseau (192), où le certificat de serveur fournisseur d'ID (258) comprend une autorisation de lecture pour un accès en lecture du serveur fournisseur d'ID (250) aux données de personnalisation (120) enregistrées dans la zone de mémoire sécurisée de la source de données de personnalisation, où l'authentification comprend une vérification de l'autorisation de lecture du serveur fournisseur d'ID (250) par la source de données de personnalisation,
• l'exécution de l'accès en lecture du serveur fournisseur d'ID (250) pour les données de personnalisation (120) à fournir enregistrées dans la source de données de personnalisation par le biais du réseau (192) et du système informatique d'utilisateur (100),
• l'envoi des données de personnalisation (120) lues du serveur fournisseur d'ID (250) au serveur de service (220) par le biais du réseau (192) et du système informatique d'utilisateur (100), où le serveur fournisseur d'ID (250) envoie la justificatif d'autorisation pour l'utilisateur permettant l'utilisation des données de personnalisation (120) sous la forme d'une signature des données de personnalisation (120) lues établie moyennant l'emploi d'une clé de signature (260) du serveur fournisseur d'ID (250), où la signature du serveur fournisseur d'ID (250) est une confirmation qu'il s'agit de données de personnalisation (120), dans le cas des données de personnalisation (120), lesquelles ont été lues à partir d'une source de personnalisation se trouvant à disposition souveraine de l'utilisateur.

11. Procédé selon l'une des revendications précédentes, dans lequel une application d'ID (110) est employée sur le système informatique d'utilisateur (100), laquelle établit le deuxième canal de communication, réceptionne la première demande, initie la lecture des données de personnalisation (120) à fournir et transmet les données de personnalisation (120) lues ainsi que le justificatif d'autorisation de l'utilisateur pour l'utilisation des données de personnalisation (120) lues, et/ou
dans lequel la page web d'enregistrement (230) comprend un lien du serveur de service (220) sous lequel une lecture de données de personnalisation (120) est initialisée par le serveur de service (220) pour la personnalisation du compte d'utilisateur (234) à partir d'une source de données de personnalisation électronique, et/ou
dans lequel le système informatique d'utilisateur (100), conjointement avec le premier défi, reçoit en outre une ID de clé générée par le jeton d'identification (140) pour la paire de clés cryptographiques spécifique au serveur à partir d'une clé d'identification (148) et d'une clé d'authentification (150) et transmet l'ID de clé conjointement avec le premier défi au serveur de service (220), et/ou
dans lequel, dans le cas de la clé d'identification (140), il s'agit d'un composant externe ou d'un composant interne du système informatique d'utilisateur (100), où le jeton d'identification (140) comprend une zone de mémoire sécurisée dans laquelle la clé d'identification (148) spécifique au serveur est enregistrée, et/ou
le procédé comprenant en outre, pour l'identification de l'utilisateur moyennant l'emploi de la clé d'identification (148) vis-à-vis du serveur de service (220) :
• la réception du deuxième défi à partir du serveur de service (220) par le système informatique d'utilisateur (100),
• la transmission du deuxième défi du système informatique d'utilisateur (100) au jeton d'identification (140),
• la réception d'une deuxième réponse établie par le jeton d'identification (140) suite au deuxième défi par le système informatique d'utilisateur (100), où la deuxième réponse comprend une signature du deuxième défi avec une clé d'identification (148) spécifique au serveur du jeton d'identification (140), où un établissement de la deuxième réponse est conditionné à une authentification réussie de l'utilisateur vis-à-vis du jeton d'identification (140),
• la transmission de la deuxième réponse par le système informatique d'utilisateur (100) au serveur de service (220), lequel dispose de la clé d'identification (150) spécifique au serveur correspondante pour la validation de la deuxième réponse fournie par l'utilisateur en tant que justificatif d'identité et associe la deuxième réponse au compte d'utilisateur (234) personnalisé de l'utilisateur dans le cas d'une validation réussie.

12. Système informatique d'utilisateur (100) comprenant un processeur (104), une mémoire (104) pourvue d'instructions de programme (106) et une interface de communication (114), dans lequel une exécution des instructions de programme (106) par le processeur (104) fait en sorte que le système informatique d'utilisateur (100) exécute un procédé de mise en oeuvre d'un mécanisme d'authentification, dans lequel le mécanisme d'authentification fournit une identification d'un utilisateur personnalisée spécifique au serveur vis-à-vis d'un serveur de service (220) moyennant l'emploi d'un jeton d'identification (140),
le procédé comprenant :
• la consultation d'une page web d'enregistrement (230) fournie par le serveur de service (220) permettant l'enregistrement de l'utilisateur auprès du serveur de service (220) par le système informatique d'utilisateur (100), par le biais d'un réseau (192), moyennant l'emploi d'une application de navigateur (108), où, dans le cadre de la consultation de la page web d'enregistrement (230), un premier canal de communication chiffré est établi entre le système informatique d'utilisateur (100) et le serveur de service (220), où le système informatique d'utilisateur (100) authentifie le serveur de service (220) dans le cadre de l'établissement du premier canal de communication chiffré moyennant l'emploi d'un certificat de serveur de service (232), où l'enregistrement de l'utilisateur comprend un établissement d'un compte d'utilisateur (234) personnalisé pour l'utilisateur par le serveur de service (220),
• l'établissement d'un deuxième canal de communication chiffré, parallèle, entre le système informatique d'utilisateur (100) et le serveur de service (220), où, dans le cadre de l'établissement du deuxième canal de communication chiffré, une authentification réciproque de l'utilisateur et du serveur de service (220) a lieu moyennant l'emploi d'un certificat d'utilisateur (112) et du certificat de serveur de service (232),
• la réception d'une première demande du serveur de service (220), par le système informatique d'utilisateur (100), pour la fourniture de données de personnalisation (120) de l'utilisateur permettant la personnalisation du compte d'utilisateur (234),
• l'initiation d'une lecture des données de personnalisation (120) à fournir par le système informatique d'utilisateur (100) à partir d'une source de données de personnalisation électronique, où une lecture des données de personnalisation (120) à fournir est conditionnée à une authentification réussie de l'utilisateur vis-à-vis de la source de données de personnalisation,
• la transmission des données de personnalisation (120) lues à partir de la source de données de personnalisation par le système informatique d'utilisateur (100) au serveur de service (220) par le biais du deuxième canal de communication chiffré,
• la transmission d'un justificatif d'autorisation de l'utilisateur pour l'utilisation des données de personnalisation (120) en tant que ses propres données de personnalisation, par le système informatique d'utilisateur (100) au serveur de service (220), par le biais du deuxième canal de communication chiffré,
• la réception d'une deuxième demande du serveur de service (220), par le système informatique d'utilisateur (100), moyennant l'emploi de l'application de navigateur (108) par le biais du premier canal de communication chiffré, pour la fourniture d'une clé d'authentification (150) spécifique au serveur pour l'authentification ultérieure de l'utilisateur du compte d'utilisateur (234) personnalisé, où la deuxième demande comprend un premier défi,
• la transmission du premier défi du système informatique d'utilisateur (100) à un jeton d'identification (140) de l'utilisateur,
• la réception d'une première réponse établie par le jeton d'identification (140) suite au premier défi par le système informatique d'utilisateur (100), conjointement avec une clé d'authentification (150) spécifique au serveur pour le serveur de service (220), sous la forme d'une clé cryptographique publique d'une paire de clés cryptographiques asymétrique créée par le jeton d'identification (140) moyennant l'emploi d'un attribut de serveur de service distinctif, où la première réponse comprend une signature du premier défi avec une clé d'identification (148) spécifique au serveur correspondant à la clé d'authentification (150), sous la forme d'une clé cryptographique privée de la paire de clés cryptographiques asymétrique créée, où un établissement de la première réponse est conditionné à une authentification réussie de l'utilisateur vis-à-vis du jeton d'identification (140),
• la transmission de la première réponse et de la clé d'authentification (150) spécifique au serveur par le système informatique d'utilisateur (100) moyennant l'emploi de l'application de navigateur (108) par le biais du premier canal de communication chiffré au serveur de service (220) pour l'enregistrement de la clé d'authentification (150) spécifique au serveur en liaison avec le compte d'utilisateur (234) personnalisé de l'utilisateur, où la première réponse sert de justificatif que l'utilisateur dispose de la clé d'identification (148) correspondant à la clé d'authentification (150), où la clé d'authentification (150) enregistrée permet au serveur de service (220) de vérifier, dans le cadre d'authentifications ultérieures de l'utilisateur, respectivement une validité d'une deuxième réponse fournie en tant que justificatif d'identification par l'utilisateur avec une deuxième signature d'un deuxième défi du serveur de service (220), lequel a été établi moyennant l'emploi de la clé d'identification (148) spécifique au serveur et pour l'associer au compte d'utilisateur (234) personnalisé de l'utilisateur.

13. Système informatique d'utilisateur (100) selon la revendication 12, où le système informatique d'utilisateur (100) comprend la source de données de personnalisation et/ou le jeton d'identification (140).

14. Système (190) comprenant un système informatique d'utilisateur (100) selon la revendication 12 ainsi qu'un jeton d'identification (140).

15. Système (190) selon la revendication 14, où le système (190) comprend en outre la source de données de personnalisation, et/ou le serveur de service (220), et/ou un serveur fournisseur d'ID (250).
